(19) **Europäisches Patentamt**

**European Patent Office**

**Office européen des brevets**

(11) **EP 0 750 108 B1**

(12) **EUROPEAN PATENT SPECIFICATION**

(45) Date of publication and mention
of the grant of the patent:
**21.04.2004 Bulletin 2004/17**

(51) Int Cl.⁷: **F02M 25/08**, F02D 35/00,
F02D 43/00, F02D 41/14,
F02D 41/22

(21) Application number: **96109979.3**

(22) Date of filing: **20.06.1996**

(54) **Internal combustion engine controller**

Steuerung für Brennkraftmaschine

Commande de moteur à combustion interne

(84) Designated Contracting States:
**DE GB IT**

(30) Priority: **22.06.1995 JP 15574795**

(43) Date of publication of application:
**27.12.1996 Bulletin 1996/52**

(73) Proprietors:
• **Hitachi, Ltd.**
**Chiyoda-ku, Tokyo 101 (JP)**
• **Hitachi Car Engineering Co., Ltd.**
**Hitachinaka-shi, Ibaraki-ken 312 (JP)**

(72) Inventors:
• **Ohtani, Asahiko**
**Mito-shi, Ibaraki 310 (JP)**
• **Hayasaka, Masayoshi**
**Hitachinaka-shi, Ibaraki 312 (JP)**

(74) Representative: **Beetz & Partner Patentanwälte**
**Steinsdorfstrasse 10**
**80538 München (DE)**

(56) References cited:
**GB-A- 2 269 028**      **US-A- 5 088 466**
**US-A- 5 090 388**      **US-A- 5 381 776**

**Description**

Background of the Invention

The present invention relates to a internal engine controller and is intended particularly to provide a controller to prevent operability and exhaust gas components from being deteriorated, when fuel steam is fed to the suction system of the internal engine.

From the viewpoint of environmental protection, regulations for exhaust gas components have been tightened, and it is legally required to burn the fuel steam in the internal engine without discharging it into atmosphere. Generally, efforts are made to meet this requirement by ensuring that the fuel steam generated in the fuel tank is adsorbed by activated carbon, and fuel steam released from activated carbon is fed to the suction system. However, concentration of actual fuel steam is not constant, and this makes it difficult to control the amount of fuel steam fed to the suction system of the internal engine, resulting in unsatisfactory air-fuel ratio control, operability and exhaust gas components.

To solve this problem, methods have been proposed to detect the amount of fuel steam to ensure accurate control of air-to ratio.

For example, Japanese Patent Application Laid-open NO. 234553-1992 [Prior Art 1] disclosed a method of ensuring accurate control of air-to ratio by calculating the weight of the fuel steam evaporated from the fuel tank and fed to the suction system on the basis of the amount of air fed to the canister and the total amount of of air and fuel steam supplied to the engine suction system from the canister.

A method is proposed to provide adequate control of the purge control valve position when the fuel steam is supplied to the suction system. For example, Japanese Patent Application Laid-open NO. 358750-1992 [Prior Art 2] discloses a method wherein comparison is made between the target fuel steam flow rate and the detected fuel steam flow rate according to the engine operating states, thereby controlling the position of the purge control valve is controlled according to the compared result and changing the purge control valve open/close speed according to the detected fuel steam concentration. Furthermore, Japanese Patent Application Laid-open NO. 245461-1990 [Prior Art 3] discloses a method of gradually increasing the position of the purge control valve when the air-to ratio detected by the air-to ratio sensor is leaner than the target value.

Also, a proposal is made to provide appropriate control of air-to ratio when fuel steam is supplied to the suction system. For example, Japanese Patent Application Laid-open NO. 131962-1987 [Prior Art 4] discloses a method where purging is carried out in advance so that there is almost no change to air-to ratio, and the compensation coefficient when purging is increased is predicted based on the compensation coefficient for air-to ratio control; the prediction is used as the compensation coefficient in synchronism with the time when purging is actually increased, thereby checking the air-to ratio fluctuation despite much purging. Furthermore, Japanese Patent Applica-tion Laid-open NO. 71536-1988, Japanese Patent Appli-cation Laid-open NO. 139941-1987 and Japanese Utility Application Model Laid-Open NO. 190541-1988 [Prior Art 5] disclose a method of increasing air-to ratio feedback control gain during purging from the canister or within a specified time after purging is started.

Despite all efforts for purge control improvement, fuel steam cannot be fed to the internal engine and combusted there if the pipe system is clogged or damaged.

For example, U.S. Patent Application 5,349,935 [Prior Art 6] and Japanese Patent Application Laid-open NO. 272417-1993 [Prior Art 7] disclose a method of applying pressure to part of the pipe system and detecting the pipe failure based on that pressure.

GB-A-2 269 028 discloses a method for purge control of vaporized fuel stored in charcoal canister to prevent vaporized fuel from being emitted outside. The method prevents adverse effects on air/fuel ratio control by eliminating the deviation of air/fuel ratio learning value derived from canister purge. The canister purging is controlled according to canister loading amount, so that overloading can be prevented even under high evaporation conditions, like high temperature and high altitude. The deviation of air/fuel ratio learning value at each address of a map resulting from canister purge is calculated and the average of the deviations is subtracted from the air fuel ratio correction ratio learning value for each address. The air/fuel ratio correction value is updated using the results of subtraction for each address. The deviation of the air/fuel ratio due to canister purging can be improved by updating the air/fuel ratio learning values excluding deviations caused by canister purge. The fuel vapor purge amount is determined based on assumed canister loading rate and it is controlled according to the assumed canister loading rate.

Summary of the Invention

The prior art (1) intends to provide accurate control by detection of actual flow rate of fuel steam. This, however, requires addition of a great number of sensors to get the amount of air fed to the canister and the total amount of air and fuel steam from the canister to the engine suction system. This results in increased cost, and is not preferred.

According to the prior art (2), engine operating states make constant changes, exhibiting a substantial change momentarily in transition. This causes a rapid change of the target fuel steam flow rate on the one hand. On the other hand, the purge flow rate changes more slowly than the engine operating states because of ventilation resistance in the small pipe connecting between the canister and suction system, and departure speed of the fuel steam stored in the canister. So deviation occurs temporarily between said target value and said detection value resulting in failure of accurate control.

According to the prior art (2), purge control valve opening speed is changed in conformity to the detected air-fuel ratio. In this case, the movement is strictly related to the detected air-fuel ratio. Accordingly, even when almost no fuel steam is generated, for example, the purge control valve is gradually opened in conformity to the detected air-fuel ratio. This results in an average increase of the time when the purge control valve is less opened. As a result, the average purge rate will decrease and unwanted fuel steam will be stored in the canister.

Furthermore, even when a great deal of fuel steam is generated, the purge control valve is gradually opened. During this time, fuel steam is supplied to the internal engine suction system regardless of the concentration. This is accompanied by the problem that air-fuel ratio is overshot to the "rich" side.

This proposal also has a problem that the intended movement cannot be ensured if the waveform of the air-fuel ratio sensor is disturbed by high frequency because of poor distribution of air-to fuel ratio to cylinders.

According this proposal, control will be made to open the purge control valve, independently of actual air-fuel ratio if the air-fuel ratio sensor gets faulty so that it indicates "lean" at all times. This is not preferred.

According to the prior art (4), operating states and residual amount of evaporator storage change constantly. This involves the problem that accurate control value cannot be ensured by predicting the coefficient in the case of greater purge rate on the basis of the air-fuel ratio control amount in the case of less purge rate.

According to the prior art (5), the air-fuel ratio is increased independently of the amount of fuel steam. This makes it difficult to ensure accurate control of air-fuel ratio.

The prior arts (6) and (7) provide excellent proposals in that failure of the purge pipe system is detected by application of pressure. Once pressure state is reset to start supply of fuel steam to the internal engine, pressurized fuel steam is suddenly into the internal engine, resulting in deterioration of operability and exhaust gas components. This problem is not addressed these prior arts.

The prior art (7) is a simple and excellent proposal providing a diagnostic device which uses the pressure switch to detect the states of the pressure in the pressurized purge pipe system. It involves a problem that correct diagnosis can be ensured only when this switch performs normal operations.

For example, when the engine is stopped with pressure applied to the purge pipe system, and the purge control valve is also kept closed, normal pressure is released in the normal pipe system because of excellent air tightness. When attempt is made to start next diagnosis under this condition, the switch remains indicating the high pressure side due to residual positive pressure from the start. Accordingly, it becomes impossible to determine if the switch is normal or not. This results in a failure in normal diagnosis of the purge pipe system. Namely, this proposal fails to ensure normal diagnostic procedure; the normal diagnostic procedure must be changed or residual positive pressure must be reduced in advance.

There remains another question of when pressure should be applied. As described above, power is applied to the purge pipe system while the purge control valve is closed. If attempt is made to apply pressure when normal purge control is carried out, the purge valve must be closed for that purpose. This will reduce the chance of purging fuel steam stored in the canister, raising another problem.

When the purge control valve is actuated to diagnose the continuity of the purge pipe system based on the pressure inside the purge pipe system, the purge control valve to which pressure was applied when the valve was closed becomes likely to stick because of the attached fuel steam component; the valve tends to fail to operate for some time after it is actuated. There is a further problem that, when the purge pipe system is long over the entire length, positive pressure tends to remain for some time because of ventilation resistance even if the purge valve starts normal operation. These problems will lead to the misjudgment that there is continuity for some time after the purge valve is actuated.

The following describes the means of solving the problems:

The problems can be solved by an internal combustion engine controller comprising the features of claim 1.

The problems can be solved by the above internal combustion engine controller comprising further a rich/lean evaluation means of the internal combustion engine controller to select between "richer" side or "leaner" side than the specified air-fuel ratio, and a purge pipe system pressuring means to increase the internal pressure supplied to the internal engine by controlling said purge control valve in direction of opening it through said purge control means; wherein specified restriction or compensation is provided to said calculation results by first calculation means or said amount of fuel steam in conformity to the operation of the pressurizing means of said purge pipe system.

The problems can be solved by the above internal combustion engine controller comprising further

(i) a purge pipe system pressurizing means to raise the internal pressure of said purge pipe system through part of said purge pipe system with said purge control valve kept closed; and

said internal combustion engine controller comprising a means to reduce the speed of opening said purge control valve or a means to increase said air-fuel ratio control response characteristic when the closing of said purge control valve is released after applying pressure to said purge pipe system.

The problems can be solved by the above internal combustion engine controller comprising further

(i) a purge pipe system pressurizing means to raise the internal pressure of said purge pipe system through part of said purge pipe system with said purge control valve kept closed;

pressure is applied by said internal combustion engine controller to said purge pipe system before said air-fuel ratio control starts.

The problems can be solved by the above internal combustion engine controller comprising further

(i) a purge pipe system pressurizing means to raise the internal pressure of said purge pipe system through part of said purge pipe system with said purge control valve kept closed;
(j) a pressure detecting means to detect the pressure of said purge pipe system; and
(k) a purge pipe system diagnostic mean to diagnose failure of said purge pipe system according to the result of pressure detection by said pressure detecting means;

wherein said purge pipe system diagnostic procedures is modified, or either diagnostic result or diagnosis history is set to a specified state, if said result of pressure detection indicates that the pressure has been above the specified pressure since the start of said internal engine.

The problems can be solved by the above internal combustion engine controller comprising further

(i) a purge pipe system pressurizing means to raise the internal pressure of said purge pipe system through part of said purge pipe system with said purge control valve kept closed;
(j) a pressure detecting means to detect the pressure of said purge pipe system; and
(k) a purge pipe system diagnostic mean to diagnose failure of said purge pipe system according to the result of pressure detection by said pressure detecting means;

wherein residual pressure is reduced by opening said purge control valve being closed, for a specified time either before or after said internal engine stops, or before said purge pipe system diagnosis procedure starts.

The problems can be solved by the above internal combustion engine controller comprising further

(i) a purge pipe system pressurizing means to raise the internal pressure of said purge pipe system through part of said purge pipe system with said purge control valve kept closed;
(j) a pressure detecting means to detect the pressure of said purge pipe system;
(k) a purge pipe system diagnostic mean to diagnose failure of said purge pipe system according to the result of pressure detection by said pressure detecting means; and
(1) a continuity diagnostic means to open said purge control valve for a specified time and to diagnose the continuity of said purge pipe system including said purge control valve on the basis of pressure of said purge pipe system after said valve is opened from the closed position;

wherein the continuity of said purge pipe system is diagnosed by said continuity diagnostic means a specified period of time after said purge control valve is driven.

The following describes the operations and effects of the means to solve problems:

The present invention according to claim 1 provides a means of using the control amount of the air-fuel ratio control means to calculate the amount of fuel steam stored in said canister or the amount of the fuel which is supplied to said internal engine from the canister, because the control amount of the air-fuel control means corresponds to the concentration of the purged fuel steam when the internal engine is operating in the steady state, for example.

In this case, however, air-fuel ratio control amount must have been leant to ensure the control amount of the air-fuel control means will not be affected by the engine variation and secular change.

(2) It provides a means of using a second calculation means, in addition to said first calculation means, to calculate the amount of fuel steam stored in said canister or the amount of the fuel supplied to said internal engine, in conformity to at least any one of the control amount of said purge control means, said internal engine operating state detection value when said internal engine is not at the specified operating state.

As mentioned above, the internal engine must be operating at the steady state in order to calculate the stored amount of fuel steam or the supplied amount of the fuel using the control amount of the air-fuel ratio control means; however, fuel steam is generated and purged in other states, needless to say. Accordingly, accurate calculate of the stored amount of fuel steam or the supplied amount of the fuel is impossible without continued calculation of the amount of fuel steam during this period. Thus, in cases where calculation using the control amount of the air-fuel ratio control means is not appropriate, other means than said control amount will be used for calculation.

Where calculation using the control amount of the air-fuel ratio control amount is not appropriate, it is preferred to calculate the amount of fuel steam estimating from control amounts or the quantities of states of the internal engine. When there is a great amount to be controlled by the purge control means and a great amount to be purged, for example, there will be an increase in the amount sucked into the internal engine, whereas the amount stored in the canister tends to decrease. Even when the amount of purge is constant, the actual amount of purge varies according to the negative pressure applied to the purge control valve, and the negative pressure differs according to the load of the internal engine, amount of sucked air, speed, the position of the throttle valve. Accordingly, calculation is made by the internal engine operating state detecting means.

On the other hand, continued operation of the internal engine at a high temperature and load will tend to cause the amount of the generated fuel steam to be increase. Calculation must be made using the control amount which indicates under what conditions the internal engine is controlled.

(3) Furthermore, the initial value of second calculation by said second calculation means is the result of said first calculation.

When the state in which calculation using the control amount of the air-fuel ratio control means is appropriate has shifted to the state in which it is not, and the state has again returned the appropriate state again, the value obtained by calculation by applying the control amount of the air-fuel controlling means to the steady state is the most reliable; so it is desirable to reset the calculated value to that value or compensate for it. Furthermore, when the state has shifted to the state in which calculation using the control amount of the air-fuel ratio control amount is not appropriate, it is important to determine at what point calculation of the fuel steam amount is to be started. Since the value obtained by calculation by applying the control amount of the air-fuel controlling means to the steady state is the most reliable, using it as an initial value to start calculation will enhances calculation accuracy.

(4) The operating state shifts to said specified operating state during calculation by said second calculation means, and when calculation is made by said first calculation means, the result of said second calculation is replaced by the result of calculation by said first calculation means implemented after said shift.

This ensures more stable and accurate values than the results of the first calculation under the specified operation when there is a sudden change of shifting to the specified operating state during the second calculation under other than said specified operating state.

(5) One fuel steam amount is derived from the result of said first calculation and that of said second calculation.

Calculation using the control amount of the air-fuel ratio control means may or may not be appropriate. It is desirable to get the results by calculation in a proper way, and the item to be calculated is a single item; the stored amount of fuel steam or the supplied amount of the fuel. The result of said first calculation result and that of said first calculation result must not be handled as separate items but must be derived as one amount of fuel steam. This permits accurate amount of fuel steam to be calculated, independently of the operating state.

(6) The operation range of said internal engine is divided into a plurality of portions comprising at least the engine load, engine speed and throttle position, and each of said calculation means is used for each of a plurality of operation ranges, thereby obtaining at least the result of calculations corresponding to each of said operation ranges or the amount of said fuel steam.

The amount of the fuel steam supplied to the internal engine is affected by the balance between the negative pressure generated by the internal engine suction system and the positive pressure generated by the fuel tank. When a comparatively great negative pressure is applied to the suction system, the amount sucked by the negative pressure is predominant. In the opposite case, the amount pushed out by the positive pressure of fuel steam is predominant; there is no agreement necessarily between the characteristics of the two. Especially there is a problem that the amount of the supplied fuel steam has poor linkage in the above mentioned ranges, and one and the same calculation formula cannot be used for both of them. Accordingly, the item to be calculated originally as stated above a single item; the stored amount of fuel steam or the supplied amount of the fuel. Accurate calculation conforming to operation range can be obtained by dividing the operation range into several portion and making calculation for each portion.

(7) Result of said calculation corresponding to said operation range by said calculation means is obtained in the operation range divided into a plurality of parts or when said amount of fuel steam was obtained, compensation is made for said amount of stored fuel steam or said amount of supplied fuel steam corresponding to the operation range other than said range according to these values.

In the case of operations unevenly distributed to any particular operation range, for example, in the case of a long-distance drive almost without idling, it is almost impossible to get the calculation result corresponding to the idling range. If idling occurs all of a sudden in such cases, there arises a discrepancy between the stored old result of calculation and actual condition of fuel steam, and accurate air-fuel ratio control cannot be ensured. To solve this problem, compensation is made for the amount of fuel steam or supplied amount of fuel steam in other than the operation range where calculation is currently made, based on the value currently under calculation. This provides a accurate amount of fuel steam even when the operation range is shifted to another after continued operation distributed unevenly in some particular range.

(8) Furthermore, storage area is reserved in the non-volatile memory corresponding to said plurality of operation range; the result of calculation made in each of said operation ranges or the amount said fuel steam is stored in said storage area corresponding to each operation range; and calculation of said first and second calculations is implemented by using the read-out value for the stored amount in the operation in said operation range, thereby obtaining the amount of fuel steam.

Namely, the amount of the fuel steam stored in the canister is maintained even by stopping the engine, so the amount of fuel steam calculated above must be maintained even when the system power is turned off. As stated above, however, the amount of fuel steam is calculated for each operation range, so the calculated amount is maintained for each operation range. At the same time, accurate amount of fuel steam in restarting after the engine stop is provided by subsequent calculation of the stored value corresponding to the actuated operation range.

(9) The internal combustion controller comprises a calculating function failure detecting means to detect operation failure of said calculation means, a calculating function detecting means to show that said operation means has recovered from said failure and is ready to function, and a surrounding condition detecting means to estimate or detect the environmental conditions of said fuel tank, canister and purge pipe system in the event of said calculating function failure. Said internal combustion engine controller sets at least any one of said storage value, said calculated value and said amount of fuel steam to the specified value or compensates for it in conformity to said environmental conditions in said calculating function failure at the start of said calculating function.

As mentioned above, the amount of fuel steam stored in the canister is maintained even after the engine is stopped. Fuel steam may be generated depending on the temperature and atmospheric pressure and will be filled and stored in the fuel tank. Accordingly, while the system power is turned off, the changes of the environmental conditions cannot be accurately followed merely by storing the amount of fuel steam calculated as mentioned above. To solve this problem, the calculated value for the amount of fuel steam is set to the specified value or is compensated according to the state during power off period which can estimated from the time when the power is turned off or the water and atmospheric temperature after restart. This provides more accurate amount of fuel steam in conformity to environmental conditions when the engine is stopped.

(10) Furthermore, said internal combustion controller comprises a sensor failure diagnostic means to detect any of the failure of said internal engine operation detecting means, and failure of said air-fuel ratio detecting means; and a control limit arrival detecting means to detect that any one of said internal engine control means and said air-fuel ratio control means has reached the limit of the controllable range. Said internal combustion engine controller stops said calculation means when it has detected that any one of said sensor failure diagnostic means and control limit arrival detecting means has failed or have reached the control limit, and sets said mount of fuel steam to the separately specified value.

When the amount of fuel steam is calculated, air-fuel ratio control amount or internal engine operating state detection value are used as mentioned above. Accurate calculation of the amount of fuel steam is not possible any more if the sensor to detect them or the actuator to control internal engine is faulty or they are beyond control because the control limit has been reached for some reason. To solve this problem, fail-safe measures are provided, for example, by stopping the calculation and setting the amount of fuel steam to the specified value.

(11) Said internal combustion controller comprises a variation control means to keep the variations in said calculation result or said amount of fuel steam within a specified variation range when obtaining said first calculation result by said first calculation means or when obtaining said amount of fuel steam.

Fuel steam supplied to the suction system comprises a mixture among fresh air from the canister drain, fuel steam stored in the canister and fuel steam generated in the fuel tank. When there is a sudden change of negative pressure in the suction system, fresh air will undergo a sudden change, resulting in a sudden change of its concentration. However, there is no sudden change in the amount of actually stored fuel steam, and discrepancy will occur between the calculated value the actual amount of fuel steam due to variations in concentration of fuel steam. In the event of a sudden load change over a certain degree as stated above, measures can be taken by momentary interruption of calculation or similar means. In the event of load changes without reaching that point, it is very difficult to prevent this discrepancy from occurring. Accordingly, to minimize this discrepancy, sudden change in calculated value must be controlled. This will provide the value conforming to the actual amount of fuel steam.

(12) variations controlled by said variation control means are determined by calculation factor(s) comprising at least any of the physical parameters affecting said first and second calculation results, said amount of fuel steam, said fuel engine operations, control amount by said air-fuel ratio control means, control amount by said purge control means, and amount of said fuel steam generated.

As stated above, changes in the amount of fuel steam are slow in relation to the changes in the amount of fresh air form the canister drain. However, the amount of detached fuel steam adsorbed in the canister tends to increase with the adsorbed amount, so it is necessary to change and control the calculation value or variation range in the amount of fuel steam in conformity to the residual amount of the fuel steam, as required. Furthermore, there is an increase in the amount to be purged in conformity to the negative pressure applied to said canister control valve or purge control amount, as stated above. The amount of fuel steam remaining in the canister purge pipe system is changed by the physical parameters affecting the generation of fuel steam including atmospheric pressure, air temperature, cooling water temperature, fuel temperature, fuel properties and the pressure inside the passage of fuel steam leading from the fuel tank to the internal engine suction system via the canister. It is also necessary to control the variation range in conformity to this, whenever required. Furthermore, since the control amount of the air-fuel ratio control corresponds to the amount of fuel steam, much fuel steam is considered to escape from the canister if the control amount of the air-fuel ratio control exhibits a great change with respect to the canister control amount. This requires change of the variation range in conformity to the control amount of the air-fuel ratio control, as required.

Thus, the value in conformity to actual amount of fuel steam can be obtained by changing and controlling the variation range according to the deviations of the amount of adsorption, various physical parameters and the air-fuel ratio control amount from the fixed values.

(13) The internal combustion engine controller has a purge control means to raise the internal pressure of said purge pipe system through part of said purge pipe system with said purge control valve kept closed, and provides specified restriction or compensation to said calculation results by first calculation means or said amount of fuel steam in conformity to the operation of the pressurizing means of said purge pipe system.

Namely, the amount of fuel steam generated in the fuel tank is affected by positive pressure in a system where leakage form the purge pipe system and function are diagnosed from the positive pressure condition with the purge control valve closed and positive pressure applied to the purge pipe system. So accurate calculation value cannot be obtained by calculation of the amount of fuel steam, as in the normal case. This problem is solved by giving restriction to the calculation of the amount of fuel steam or by making compensation in conformity to application of positive pressure.

(14) Furthermore, it is preferred that the internal combustion engine controller has a means to detect at least any one of the environmental condition parameters for said fuel tank, canister and purge pipe system, as well as fuel condition parameters, and provide restriction to said calculation means in conformity to said detection or compensates for at least any one of said first and second calculation results or said amount of fuel steam.

As mentioned above, when the state in which calculation using the control amount of the air-fuel ratio control amount is not appropriate, it is preferred that the operating state detection value of the internal engine be used for calculation. It is preferred to have a means to detect directly or indirectly the environmental parameters which cannot be detected thereby but affect the generation of fuel steam, including atmospheric pressure, air temperature, cooling water temperature, fuel temperature, fuel properties and the pressure inside the passage of fuel steam leading from the fuel tank to the internal engine suction system via the canister, as well as fuel state parameters including fuel properties and residual amount of fuel. It is also preferred to stop calculation or to provide some compensation for the calculation value when it is inappropriate to calculate the amount of fuel steam according to these detection results. In such cases, it is possible to prevent wrong values from being obtained by stopping calculation or providing some compensation for the calculation value.

(15) Accurate air-fuel ratio control is realized by using a means to change control characteristics of any one of purge control valve speed, purge control valve position and air-fuel ratio control speed, in conformity to said first and second calculation results or said amount of fuel steam.

Namely, as mentioned above, the first and second calculation values or the amount of fuel steam shows the amount of fuel steam stored in the canister or the amount of fuel steam supplied to the internal engine from the canister.

They apparently affects the ratio between air and fuel supplied to the internal engine. However, since it is not the fuel steam which is measured by the sensor or similar device, it is difficult to ensure an accurate control of the air-fuel ratio of the mixed gas supplied to the engine finally. Accordingly, it is intended to calculate the accurate amount of fuel steam in the manner stated above and to change the characteristics to conform to the amount of fuel steam where the purge control and air-fuel ratio control speed are calculated, thereby ensuring more accurate air-fuel ratio control.

(16) The internal combustion engine controller has a reduced speed fuel shutoff means to shut off fuel supply to said internal engine, wherein said fuel shutoff means to shut off the fuel a specified time after detecting the speed reduction, and determines whether or not said purge control valve should be set to the purge shutoff condition during said specified period of time in conformity to at least any one of said first and second calculation results or said amount of fuel steam; and a means to set said purge control amount to the purge shutoff condition according to said determination.

When the supply of fuel to the internal engine in speed reduction is stopped, sudden stop of the fuel supply will cause sudden torque change which results in shocks. To prevent this, fuel supply to all the cylinders is generally stopped after a certain period of allowance. To put it conversely, if only the supply of fuel steam from the purge control valve is stopped during the period of allowance, changes in air-fuel ratio are likely to occur. Accordingly, it is preferred to hold the air-fuel ratio control, with the purge control valve kept closed. When a great amount of fuel steam is stored in the canister, excessive amount of fuel steam will be supplied in the system where purge is carried out by the negative pressure of the suction pipe, and this will aggravate the exhaust gas against expectation. To solve this problem, whether the purge control valve is to be closed or not during the period of allowance is determined according to the amount of fuel steam; then purging is carried out.

(17) The present invention provides another form of the internal combustion engine controller which comprising:

(a) a fuel tank;
(b) a canister to store fuel steam;
(c) a purge pipe system leading from said fuel tank to the air suction system of the internal engine via said canister;
(d) a purge control means acting on the purge control valve installed in said purge pipe system and controlling the volume of fuel steam to be supplied to said internal engine;
(e) an internal engine operating state detecting means to detect the operating state of the internal engine;
(f) an internal engine control means to control the internal engine according to said operating states;
(g) an air-fuel ratio detecting means to detect the air-fuel ratio of the mixed fuel gas supplied to said internal engine;
(h) an air-fuel ratio control means to control said air-fuel ratio to the target ratio in conformity to the result of detecting said air-fuel ratio; and
(i) a rich/lean evaluation means to select between "richer" side or "leaner" side than the specified air-fuel ratio;

characterized in controlling said purge control amount so as to increase it by the specified range when the amount of fuel steam to be supplied to said internal engine is increased and when the evaluation of said rich/lean evaluation means has shifted from "richer" to "leaner", while maintaining said control amount otherwise, by controlling said purge control valve in direction of opening it through said purge control means.

When the purge valve is controlled in a direction of opening it, it is preferred to open the valve gradually after air-fuel ratio control can follow it. The present invention provides a specific method for this. Namely, if the air-fuel ratio sensor indicates "lean", it can be considered that air-fuel ratio control follows. If the valve is controlled to open while it indicates "lean", the purge control valve will be opened independently of actual air-fuel ratio, in the event that the air-fuel ratio sensor has become faulty in the mode indicating "lean". To solve this problem, control is made to open the purge control valve slightly only when the air-fuel ratio sensor shifted form "rich" to "lean".

This prevents excessive fuel steam from being supplied to the internal engine.

(18) The rich/lean evaluation means evaluates the detection by air-fuel ratio detecting means based on the signal filtered through a low-pass filter.

Excessive valve opening will result if control is made as mentioned above, using that signal when the output of the air-fuel ratio sensor is disturbed by high frequency due to variations among cylinders of supplied mixed gas. To solve this problem, the output of the air-fuel ratio sensor is filtered by the low-pass filter and the resulting valve is used to avoid excessive fuel supply even when the output of the air-fuel ratio sensor is disturbed by high frequency.

(19) The internal engine being a multi-cylinder internal engine is grouped for some of the cylinders, and each of said groups is provided with said air-fuel ratio detecting means. The internal combustion controller has:

(a) an air-fuel ratio control means for each group to control to the target ratio said air-fuel ratio of the mixed gas supplied to said internal engine for each group in conformity to the result of detecting said air-fuel ratio;
(b) a filtering means to filter the result of detection of said air-fuel ratio detecting means for each group by means of each low-pass filter;
(c) a rich/lean evaluation means to determine whether the post-filtering air-fuel ratio detection value obtained by said filtering means is "richer" or "leaner" than each specified air-fuel ratio; and
(d) a means to controls said purge control amount so as to increase it by the specified range when the evaluation of said rich/lean evaluation means has shifted from "richer" to "leaner", and maintains said control amount otherwise;

wherein it is preferred that shift from "richer" to "leaner" for each group is referenced alternately.

When the purge control valve is opened as above in a system where air-fuel ratio sensors are laid out for respective banks in the V-shaped and air-fuel ratio control is made separately, there is only one purge control valve even if there are two or more air-fuel ratio sensors. So the valve is controlled to open by mutual detection of shift from "rich" to "lean" of air-fuel ratio sensor signals. This method provides more accurate air-fuel ratio for each bank. In this case as stated above, it goes without saying that the air-fuel ratio sensor signal is preferred to be filtered through a low-pass filter.

(20) Furthermore, the internal combustion engine controller has an air-fuel ratio detector failure diagnostic means to diagnoses to determine whether said air-fuel ratio detecting means for each group is faulty or not. If said air-fuel ratio detector failure diagnostic means has detected failure in any one of said plurality of air-fuel ratio detecting means, said shift from "richer" to "leaner" is detected using the results of filtering the detection results of normal air-fuel ratio detecting means by said low-pass filter, and purge control amount is controlled to increase in conformity to said shift.

Namely, when the purge control valve is controlled to open by referencing of the air-fuel ratio sensors with each other in the V-shaped engine as stated above, the normal air-fuel ratio sensor is used to control the valve to open in the event that one of the air-fuel ratio sensors becomes faulty. This method provides purge control almost the same as normal purge control.

(21) If said air-fuel ratio detector failure diagnostic means has detected failure in either or both of the groups consisting of said plurality of air-fuel ratio detecting means, said group-wise air-fuel ratio control means of the group with said failure having been detected is stopped, and the control amount of said purge control means is set to a predetermined value or a limit value is set to said control amount.

When the air-fuel ratio sensor has broken, air-fuel ratio cannot be controlled, so the operation is stopped. If the purge control valve is opened when another air-fuel ratio sensor is broken as mentioned above, air-fuel ratio of the bank on the side where air-fuel ratio control is stopped cannot be controlled, and excessive concentration in air-fuel ratio will occur. In this case, it is necessary to restrict the amount of purge control valve opening to a smaller degree to ensure that excessive concentration in air-fuel ratio will not occur to the air-fuel ratio of the bank on the side where air-fuel ratio control is stopped.

Furthermore, it is preferred that the following measures be taken when both air-fuel ratio sensors are broken: As stated above, compensation and control can be made by using the signal of another air-fuel ratio sensors when one of the air-fuel ratio sensors is faulty. Control is not possible if both air-fuel ratio sensors are broken; hence, easy opening of the purge control valve is not possible. However, if the purge control valve is left open, fuel steam will not be completely burnt by the internal engine, and the canister will be filled up, resulting in the fuel steam being discharged into the atmosphere. This must be avoided. To solve this problem, the position of the purge control valve is set to a specified value to the extent that excessive concentration in air-fuel ratio will not occur or a restriction (upper limit value) is provided to ensure the valve will not open in excess of the specified position.

(22) It is necessary that the internal combustion engine controller have any one of the amounts of fuel steam derived from said first and second calculation results by said first and second calculation means and from the result of said calculation, detect shift from said "richer" to "leaner", and the range of increasing said purge control amount in conformity to said shift be changed and controlled according to at least any one of said first and second calculation results, said amount of fuel steam and control amount of said air-fuel ratio control means.

When the purge control valve is controlled in the direction of opening, it is preferred to open it gradually after the air-fuel ratio control has followed it, as mentioned above. When the air-fuel ratio control speed is sufficient to permit the follow-up with respect to the amount of fuel steam to be purged, it is preferred to open the purge control valve more quickly to a more open position. This prevents the fuel steam from remaining in the purge pipe system.

(23) Said purge control valve is controlled in the direction of opening by said purge control means, and characteristics of said air-fuel ratio control means are changed and controlled according to at least any one of said first and second calculation results and said amount of fuel steam, when the amount of fuel steam supplied to said internal engine is increased.

Namely, when it is considered that the air-fuel ratio control speed with respect to the amount of fuel steam to be purged can be followed up sufficiently based on any one of the purge control valve control amount, the first and second calculation results, and the amount of fuel steam, then the air-fuel ratio control speed is increased to ensure there will be no problem by opening the purge control valve more quickly to a more open position, thereby improving follow-up characteristics. This will ensure efficient purging of fuel steam, and prevent fuel steam from remaining in the purge pipe system

(24) The present invention provides another form of the internal combustion engine controller which comprising:

    (a) a fuel tank;
    (b) a canister to store fuel steam;
    (c) a purge pipe system leading from said fuel tank to the air suction system of the internal engine via said canister;
    (d) a purge control means acting on the purge control valve installed in said purge pipe system and controlling the volume of fuel steam to be supplied to said internal engine;
    (e) an internal engine operating state detecting means to detect the operating state of the internal engine;

(f) an internal engine control means to control the internal engine according to said operating states;

(g) an air-fuel ratio detecting means to detect the air-fuel ratio of the mixed fuel gas supplied to said internal engine;

(h) an air-fuel ratio control means to control said air-fuel ratio to the target ratio in conformity to the result of detecting said air-fuel ratio; and

(i) a purge pipe system pressurizing means to raise the internal pressure of said purge pipe system through part of said purge pipe system with said purge control valve kept closed;

(j) a means to reduce the speed of opening said purge control valve or a means to increase said air-fuel ratio control response characteristic when the closing of said purge control valve is released after applying pressure to said purge pipe system.

In an internal engine controller having a system where diagnosis is performed with the purge control valve kept open and pressure applied to the purge pipe system, the prevent invention provides a specific technique of controlling the changes in air-fuel ratio when the purge control valve is opened. That is, when the purge control valve is opened after pressure has been applied, fuel steam is pushed out into the suction system of the internal engine by the applied positive pressure. Normal control procedure cannot control the air-fuel ratio, raising a problem of deteriorating exhaust gas component. To solve this problem, when the purge control valve is opened after application of the pressure to the purge pipe system of said system, compensation is made so that valve opening speed is reduced or air-fuel ratio control speed is increased, thereby ensuring that air-fuel ratio control can follow up the increase in fuel steam.

(25) The present invention provides another form of the internal combustion engine controller which comprising:

(a) a fuel tank;

(b) a canister to store fuel steam;

(c) a purge pipe system leading from said fuel tank to the air suction system of the internal engine via said canister;

(d) a purge control means acting on the purge control valve installed in said purge pipe system and controlling the volume of fuel steam to be supplied to said internal engine;

(e) an internal engine operating state detecting means to detect the operating state of the internal engine;

(f) an internal engine control means to control the internal engine according to said operating states;

(g) an air-fuel ratio detecting means to detect the air-fuel ratio of the mixed fuel gas supplied to said internal engine;

(h) an air-fuel ratio control means to control said air-fuel ratio to the target ratio in conformity to the result of detecting said air-fuel ratio; and

(i) a purge pipe system pressurizing means to raise the internal pressure of said purge pipe system through part of said purge pipe system with said purge control valve kept closed;

said internal combustion engine controller characterized in that pressure is applied to said purge pipe system before said air-fuel ratio control starts.

(26) The internal combustion engine controller is preferred to further comprise a secondary air feed device to introduce fresh air into the exhaust system of said internal engine, wherein part or the whole of the time to apply pressure to said purge pipe system is contained in the period of time during which said secondary air feed device is operating.

The purge pipe system is opened when the purge control valve is kept closed as mentioned above. So if an attempt is made to apply pressure during normal purge control, the purge control valve must be closed for that purpose. This will reduce the chance of purging the fuel steam stored in the canister, and must be avoided. As stated above, purge control is closely related to air-fuel ratio control, and does not operate basically when air-fuel ratio control is not working. Namely, purge control is disabled before air-fuel ratio control starts and the purge control valve is kept closed. Accordingly, the purge control valve opening time is saved, and fuel steam purging efficiency is improved by application of pressure to the purge pipe system before the air-fuel ratio control starts or when the secondary air feed device is working.

(27) The present invention provides an internal combustion engine controller comprising:

(a) a fuel tank;

(b) a canister to store fuel steam;

(c) a purge pipe system leading from said fuel tank to the air suction system of the internal engine via said canister;

(d) a purge control means acting on the purge control valve installed in said purge pipe system and controlling the volume of fuel steam to be supplied to said internal engine;

(e) an internal engine operating state detecting means to detect the operating state of the internal engine;

(f) an internal engine control means to control the internal engine according to said operating states;

(g) an air-fuel ratio detecting means to detect the air-fuel ratio of the mixed fuel gas supplied to said internal engine;

(h) an air-fuel ratio control means to control said air-fuel ratio to the target ratio in conformity to the result of detecting said air-fuel ratio;

(i) a purge pipe system pressurizing means to raise the internal pressure of said purge pipe system through part of said purge pipe system with said purge control valve kept closed;

(j) a pressure detecting means to detect the pressure of said purge pipe system; and

(k) a purge pipe system diagnostic mean to diagnose failure of said purge pipe system according to the result of pressure detection by said pressure detecting means;

wherein said purge pipe system diagnostic procedures is modified, or either diagnostic result or diagnosis history is set to a specified state, if said result of pressure detection indicates that the pressure has been above the specified pressure since the start of said internal engine.

A pressure detecting means is required in a system where diagnosis is performed by pressure applied to the purge pipe system. When pressure switch is used as the means, for example, its operation will be affected by residual pressure. So if the detecting means already indicates the high pressure side when the diagnosis is started, there is no knowing if the detecting means itself is broken or not, resulting in disabled diagnosis of the purge pipe system. In such a case, diagnostic error or missing diagnosis can be prevented by using the following means; a means of changing the purge pipe system diagnostic procedure and setting either diagnostic result or diagnosis history to the specified state, for example, the means which leaves the current diagnosis to the next diagnosis without implementing current diagnosis, assuming that there is no trouble currently in the purge pipe system.

(28) The present invention provides another form of the internal combustion engine controller which comprising:

(a) a fuel tank;

(b) a canister to store fuel steam;

(c) a purge pipe system leading from said fuel tank to the air suction system of the internal engine via said canister;

(d) a purge control means acting on the purge control valve installed in said purge pipe system and controlling the volume of fuel steam to be supplied to said internal engine;

(e) an internal engine operating state detecting means to detect the operating state of the internal engine;

(f) an internal engine control means to control the internal engine according to said operating states;

(g) an air-fuel ratio detecting means to detect the air-fuel ratio of the mixed fuel gas supplied to said internal engine;

(h) an air-fuel ratio control means to control said air-fuel ratio to the target ratio in conformity to the result of detecting said air-fuel ratio;

(i) a purge pipe system pressurizing means to raise the internal pressure of said purge pipe system through part of said purge pipe system with said purge control valve kept closed;

(j) a pressure detecting means to detect the pressure of said purge pipe system; and

(k) a purge pipe system diagnostic mean to diagnose failure of said purge pipe system according to the result of pressure detection by said pressure detecting means;

wherein residual pressure is reduced by opening said purge control valve being closed, for a specified time either before or after said internal engine stops, or before said purge pipe system diagnosis procedure starts.

As mentioned above, positive pressure remaining before the start of diagnosis will give adverse effect to the result of diagnosis in a system where diagnosis is performed by pressure applied to the purge pipe system. To reduce the pressure before diagnosis starts, if the purge control valve is closed, it is kept opened for a specified time, thereby reducing residual pressure.

(29) The present invention provides another form of the internal combustion engine controller which comprising:

(a) a fuel tank;

(b) a canister to store fuel steam;

(c) a purge pipe system leading from said fuel tank to the air suction system of the internal engine via said canister;

(d) a purge control means acting on the purge control valve installed in said purge pipe system and controlling the volume of fuel steam to be supplied to said internal engine;

(e) an internal engine operating state detecting means to detect the operating state of the internal engine;

(f) an internal engine control means to control the internal engine according to said operating states;

(g) an air-fuel ratio detecting means to detect the air-fuel ratio of the mixed fuel gas supplied to said internal engine;

(h) an air-fuel ratio control means to control said air-fuel ratio to the target ratio in conformity to the result of detecting said air-fuel ratio;

(i) a purge pipe system pressurizing means to raise the internal pressure of said purge pipe system through part of said purge pipe system with said purge control valve kept closed;

(j) a pressure detecting means to detect the pressure of said purge pipe system;

(k) a purge pipe system diagnostic mean to diagnose failure of said purge pipe system according to the result of pressure detection by said pressure detecting means; and

(1) a continuity diagnostic means to open said purge control valve for a specified time and to diagnose the continuity of said purge pipe system including said purge control valve on the basis of pressure of said purge pipe system after said valve is opened from the closed position;

wherein the continuity of said purge pipe system is diagnosed by said continuity diagnostic means a specified period of time after said purge control valve is driven.

As mentioned above, when the continuity of said purge pipe system is diagnosed based on the pressure in the purge pipe system by energizing the purge control valve, there is a problem easily causing judgment error because of the sticking of the purge control valve and the positive pressure remaining for some time after it has been energized. To solve this problem, continuity is disabled in the purge pipe system for a specified time after it has been energized.

The present invention allows accurate calculation of the amount of fuel steam in the operating range determined by the operating conditions of the internal engine, engine load, speed and throttle position. Furthermore, follow-up of air-fuel ratio control is ensured by control of the purge control valve corresponding to the rich/lean evaluation of air-fuel ratio, and this makes it possible to obtain characteristics of the optimum purge control, internal engine control and air-fuel ratio control. When the purge pipe system failure by pressure applied to the purge pipe system is diagnosed, it also enables diagnosis without deteriorating the controllability of the internal engine, thereby ensuring control of the internal engine with reduced changes in air-fuel ratio. At the same time, it provides detection of the purge pipe system failure without misjudgment.

Brief Description of the Drawings

Figure 1 is a drawing representing the system configuration of one embodiment according to the present invention.

Figure 2 is a schematic drawing representing the structure of the purge control valve.

Figure 3 is a drawing illustrating the purge control valve drive circuit.

Figure 4 is a drawing showing the purge control processing.

Figure 5 is a drawing illustrating the purge control basic output value.

Figure 6 is a drawing representing the purge control dynamic limitation.

Figure 7 is a drawing illustrating the relationship between the air-fuel ratio sensor signal movement and dynamic limitation movement.

Figure 8 is a drawing representing the processing of purge control dynamic limitation.

Figure 9 is a drawing showing the amount of fuel steam and step width in purge control dynamic limitation.

Figure 10 is a drawing showing the fuel injection control processing.

Figure 11 is a drawing showing the relationship between the air-fuel ratio sensor signal and air-fuel ratio control amount a.

Figure 12 is a drawing showing the processing for calculation of the amount of fuel steam.

Figure 13 is another drawing showing the processing for calculation of the amount of fuel steam.

Figure 14 is still another drawing showing the processing for calculation of the amount of fuel steam.

Figure 15 is a drawing showing the amount of fuel steam and variation control range for the amount of fuel steam.

Figure 16 is a drawing showing the processing of air-fuel ratio control.

Figure 17 is a drawing showing the processing of purge pipe system diagnosis.

Figure 18 is a block drawing representing the internal structure of controller 6.

Detailed Description of the Preferred Embodiment

The following gives detailed description of the present invention with reference to embodiments:

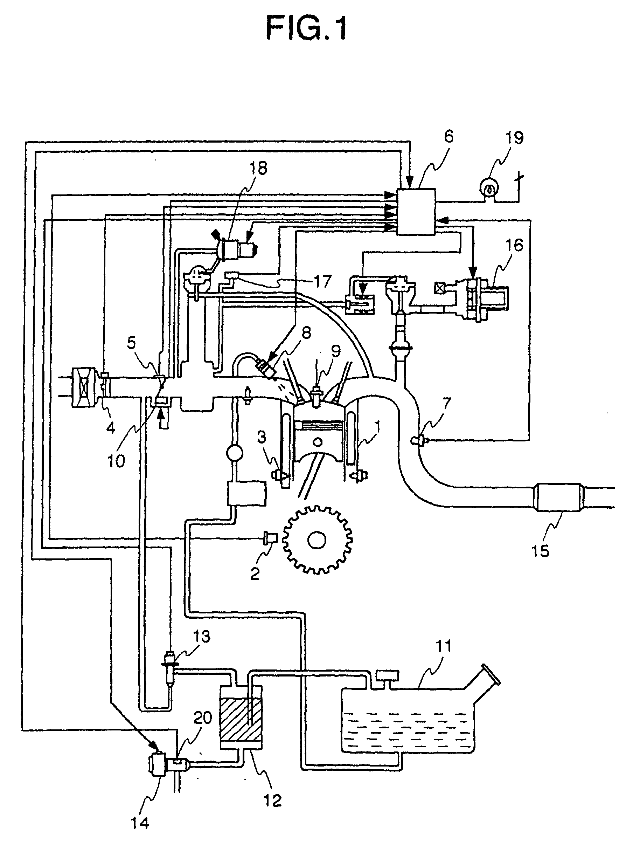

Figure 1 shows still one embodiment according to the present invention. The operating conditions of the internal engine 1 are detected by the speed sensor 2, coolant temperature sensor 3, sucked air volume sensor 4 and throttle position sensor 5, and are also detected by the air-fuel ratio sensor 7. These detected results are input into the controller 6 which controls the injector 8, firing coil (not illustrated), ignition plug 9 and air flow control valve 10 during idle time, accordingly, and the operation of the internal engine are controlled. Fuel steam generated in the fuel tank 11 is stored in the canister 12, and is fed to the suction system of the internal engine 1 via the purge control valve 13 under the control of the controller 6. Furthermore, positive pressure is applied to the purge pipe system by the positive pressure application device 14 under the control of the controller 6. The applied pressure is detected by the pressure detector 20, and that information is sent to controller 6.

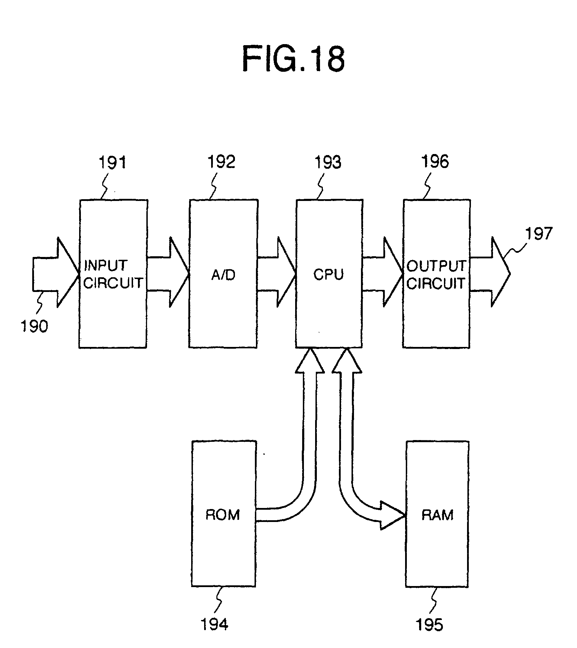

The controller 6 contains the purge control means, internal engine control means, air-fuel ratio control means, variation range control means, rich/lean evaluation means, fuel shutoff means at reduced speed, purge pipe system diagnostic means and continuity diagnostic means. The controller 6 comprises the input circuit 191, A/D converter 192, central processor 193, ROM 194, RAM 195 and output circuit 196, as illustrated in Fig. 18. The input circuit 191 receives the input signal 190 (for example, signals from coolant temperature sensor 3, sucked air volume sensor 4, throttle position sensor 5 and air-fuel ratio sensor 7), eliminates noise components from said signal, and outputs the signal to the A/D converter 192. The A/D converter 192 converts the signal from analog to digital form, and outputs the result to the central processor 193. The central processor 193 has a function of receiving the result of the signal from analog to digital form and executing the specified program stored in the ROM 194, thereby implementing above mentioned controls and diagnoses. Furthermore, the result of arithmetic operation and the result of analog-to-digital conversion are temporarily stored in the RAM 195. Furthermore, the result of calculation is output as control output signal 197 via the output circuit 196 and is used for the control of injector 8. It should be noted, however, that the configuration of controller 6 is not restricted to the above statement.

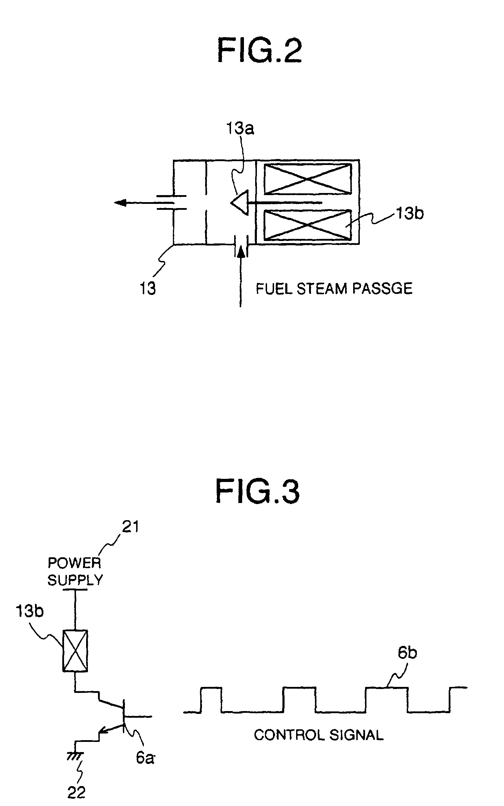

Fig. 2 is a schematic diagram of the purge control valve. This purge control valve 13 comprises the valve mechanism 13a and solenoid valve 13b. When solenoid valve 13b is energized, valve mechanism 13a is opened, thereby causing the fuel steam passage to open. Conversely, the valve mechanism 13a is closed when solenoid valve 13b is deenergized, thereby causing the fuel steam passage to be closed.

Fig. 3 illustrates the method of actuatig the solenoid valve 13b. One end of the solenoid valve is connected to the power supply 21, while the other end is connected to the transistor circuit 6a. Needless to say, it can be composed of FET or the like. The transistor circuit 6a is driven by the on/off duty-control signal 6b. Changing this on-off duty ratio also changes the ratio of when the valve is open and the ratio when closed. This is substantially equivalent to changing the opening of fuel steam passage, thereby controlling the amount of fuel steam to be purged. It goes without saying that the purge control valve 13 can be realized by using the stepping motor, DC servo motor and linear solenoid valve. This embodiment has an advantage of being less costly.

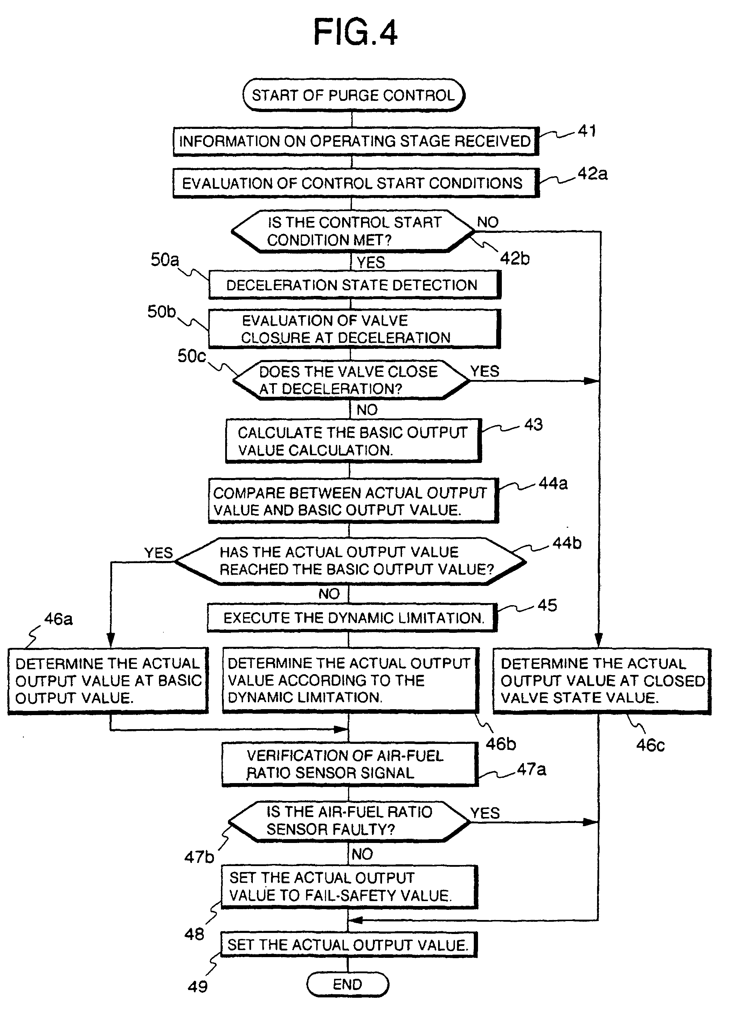

The following describes the purge control means with reference to Fig. 4. This procedure is implemented at internals of a specified time. The information on operating state of internal engine 1 is input in step 41. This is composed of speed and load of the internal engine 1, signal of coolant temperature sensor 3, signal of throttle position sensor 5, and signal of air-fuel ratio sensor 7. Based on the information of operating state captured in step 41, verification is made in step 42a to see if the purge control is started or not. This is implemented, for example, depending on whether or not the internal engine 1 has started and is warmed up, air-fuel ratio sensor 7 has actuated, or air-fuel ratio control is started. Then in response to the result of verification in step 42a, the control proceeds to step 46c when it has been determined in step 42b that purge control be not started. There the actual output value is determined to close the purge control valve 13, and the control proceeds to step 49. This actual output value is set as a duty value, thereby terminating the present procedure.

When it has been determined that purge control be started, the control proceeds to step 50a detect to see if the speed of the internal engine 1 is reduced or not. If it has been detected in step 50a that the internal engine 1 is decelerated, verification is made in step 50b to see if purge control valve 13 is closed in declaration or not. This is implemented based on the calculated amount of fuel steam to be described later, if the fuel is shut off or the present time falls on the allowance time for fuel shut-off. If it has been determined in step 50c, in response to the result of step 50b, that the amount of fuel steam be excessive and that the purge control valve be closed, the control proceeds to step 46c. There the actual output value is determined to close the purge control valve 13, and the actual output value is set as the duty value, thereby terminating the current procedure.

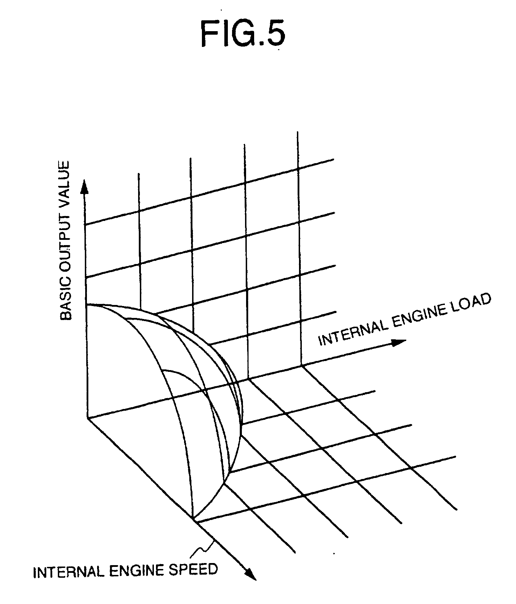

The control proceeds to step 43 when deceleration is not detected in step 50a or when it has been determined in step 50b that there is no fuel shut-off and the purge control can be closed since the amount of fuel steam is insufficient even during the allowance time for fuel shut-off. In step 43 the basic output value is calculated. The basic output value is given as a function off the load and speed of the internal engine, as shown in Fig. 5. The basic output value obtained here is compared with the final actual output value in step 44a, and verification is made to see whether the dynamic limitation (to be described later) is to be terminated or not. When it has been verified in step 44a that the actual output value has already reached the basic output value, it is determined in step 44b that the dynamic limitation has been terminated and the control proceeds to step 47a.

If it has been determined in step 44b that the dynamic limitation be continued, the control proceeds to step 45 to implement the dynamic limitation (to be described later). The actual output value in step 46b is once set to the value obtained from the dynamic limitation, and the control proceeds to step 47a. Verification is made in step 47a to check for any failure -- for example, to see if the signal has failure due to wire breakdown or short circuiting. If it has been determined in step 47b that there is no failure, the control proceeds to step 49, where the actual output value is set as the duty value, thereby terminating the current procedure. When it has been determined in step 47b that there is failure, actual output value is reset to the fail-safe value in step 48, and the control proceeds to step 49 where the actual output value is set as the duty value, thereby terminating the current procedure. In this case, instead of setting it to the fail-safe value, the actual output value can be adjusted to a smaller value virtually by setting the actual output value below the specified value, by making compensation to ensure that the actual output value will be reduced at a specified percentage, or by changing the characteristics so that these restrictions are likely to change.

According to the this embodiment, the basic output value is set according to the operating state of the internal engine 1. This provides an advantage that the optimum control of the purge control amount is possible in any area. Furthermore, dynamic limitation works only until actual output value reaches the basic output value; thereafter, the purge control amount shifts according to the movement of the basic output value. This ensures highly effective purging, at the same time, allows purging to be started without giving adverse effect to the air-fuel ratio control. These advantages can be provided with a simple structure.

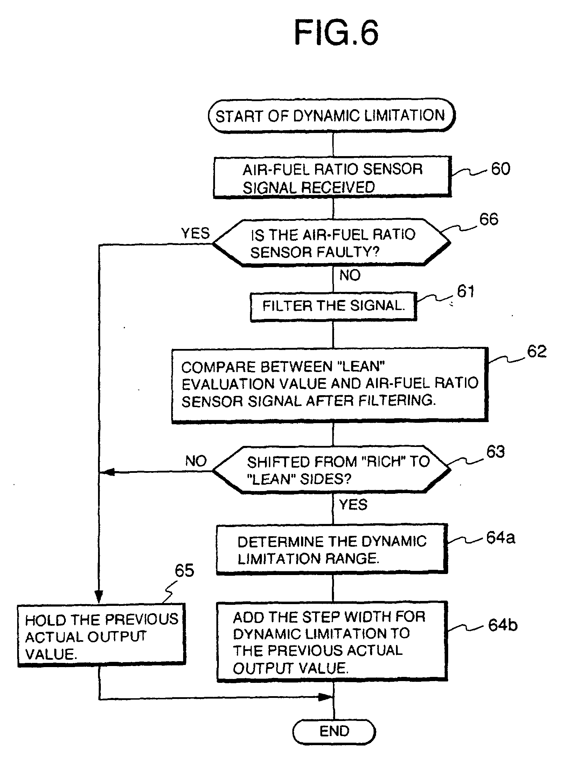

The following describes the dynamic limitation with reference to Fig. 6. This procedure is implemented at specified intervals of time. The air-fuel ratio sensor signal is captured in step 60, and verification is made in step 66 to see if the signal is faulty due to wire breakdown or short circuiting. When it has been determined that it is faulty, the control proceeds to step 65. In this case, shift of the air-fuel ratio sensor signal cannot be detected, so the step of dynamic limitation cannot proceed. Accordingly, the previous actual output value is held in step 65, thereby terminating the processing of dynamic limitation.

When it has been determined in step 66 that there is no failure, that signal is filtered in step 61. This can be realized by the low-pass filter by the linear equation of retardation type as illustrated in Mathematical Expression 1, but is not limited thereto.

Here gf denotes filtering gain (gf $\leq$ 1), $O_2$ shows air-fuel ratio sensor signal, $O_2f$ represents the signal after filtering, and subscripts (i) and (i-1) indicates the current value and previous value, respectively.

$$O_2f_{(i)} = gf \times O_2 + (1\text{-}gf) \times O_2f_{(i\text{-}1)} \qquad \text{Mathematical Expression 1}$$

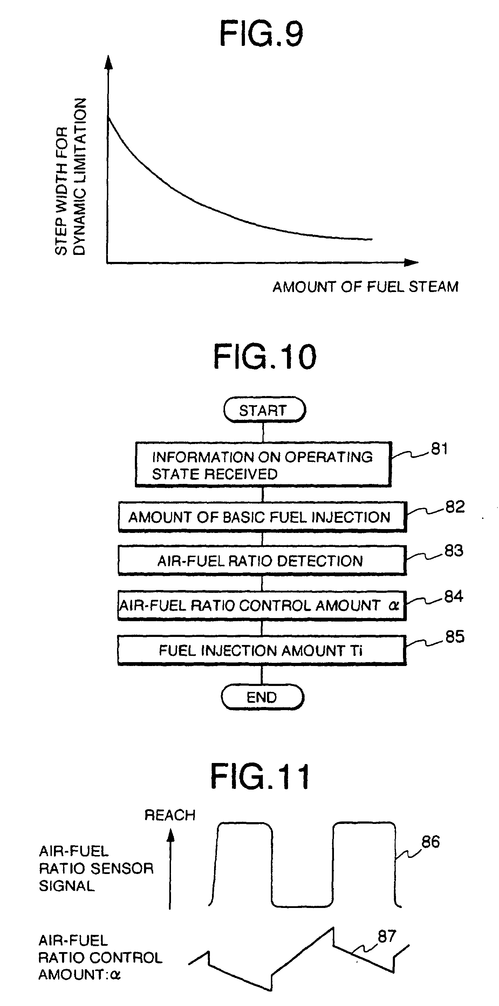

In step 62, the $O_2f$ signal after filtering is compared with the "lean" evaluation value, and verification is made to see if the $O_2f$ has shifted from the "rich" side to "lean" side. When it has been determined in step 63 from the result of this verification that it has shifted, then the control proceeds to step 64a, where the step width of dynamic limitation is determined according to the amount of fuel steam to be described later. Fig. 9 illustrates the relationship between the amount of fuel steam and step width of dynamic limitation. Using the step width determined in step 64a, this step width is added to the previous actual output value in step 64b, thereby terminating the processing of dynamic limitation.

If it has been determined in step 63 that the $O_2f$ has failed to shift from "rich" side to "lean" side, the control proceeds to step 65 where the previous actual output value is held, thereby terminating the processing of dynamic limitation.

According to this embodiment, the shift from "rich" to "lean" sides is determined based on the value gained by filtering the air-fuel ratio signal. This provides an advantage of being highly resistant to variations of noise or air-fuel ratio in different cylinders. Furthermore, filtering is expressed in a simple linear equation of retardation type. The computer program for dynamic limitation can be realized in blocks. This provides an advantage of facilitating the computer programming.

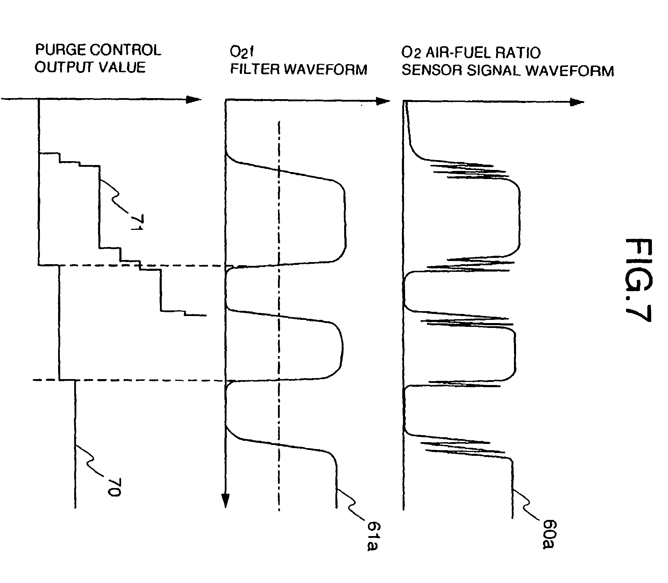

Fig.7 illustrates the difference of operations according to the presence or absence of filtering with respect to the dynamic limitation. Numeral 70 indicates the case when the operation is performed based on the air-fuel ratio sensor signal after filtering, while numeral 71 indicates the case when the operation is performed before filtering.

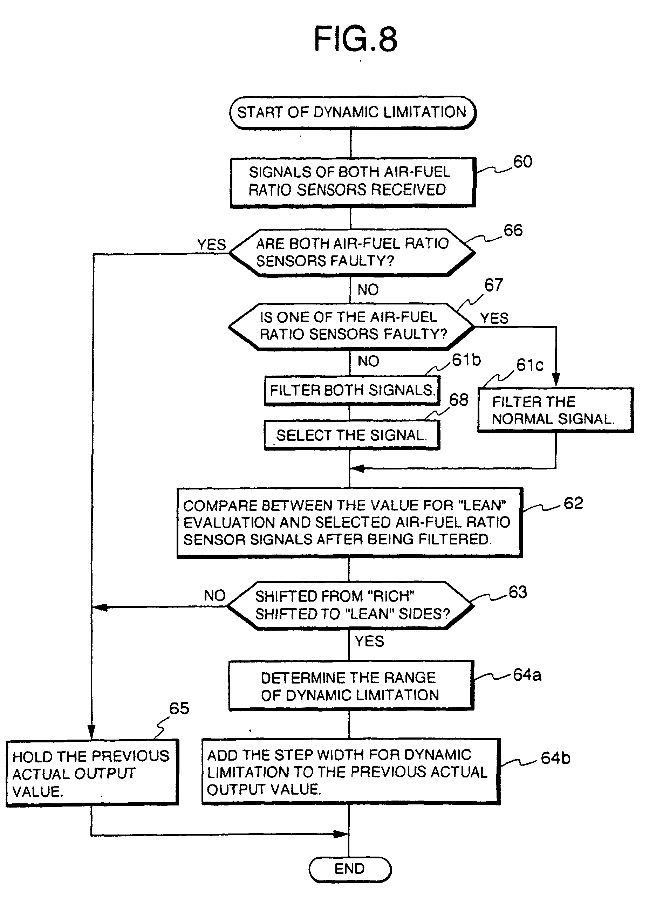

Fig.8 illustrates the case when an air-fuel ratio sensor is provided for each bank as in the v-type internal engine. This procedure is implemented at specified intervals. In step 60, air-fuel ratio sensor signal is input into the system as in Fig. 6. In this case, however, this is done with respect to the air-fuel ratio sensors for both banks. Then in step 66, verification is made in step 66 see if both air-fuel ratio sensor signals are faulty due to wire breakdown or short circuiting. When it has been determined that both are faulty, the control proceeds to step 65. In this case, shift of the air-fuel ratio sensor signal cannot be detected, so the step of dynamic limitation cannot proceed. Accordingly, the previous actual output value is held in step 65, thereby terminating the processing of dynamic limitation.

When it has been determined in step 66 that at least one of the air-fuel ratio sensor signals has no problem, evaluation is made in step 67 to determine if both are normal or only one is normal. If both are determined to be normal, the control proceeds to step 61b, where both air-fuel ratio sensor signals are filtered. Then for alternate referencing of signals after having been filtering, step 68 selects the signal to be referenced. If only one of them is determined to be normal in step 67, the control proceeds to step 61c, where normal signal is selected and filtered.

In the next steps 62 to 65, the same processing as Fig. 6 is carried out based on the selected signal. According to the present embodiment, processing of both air-fuel ratio sensor signals is performed, so the computer program for dynamic limitation can be realized in blocks. This provides an advantage of facilitating the computer programming.

Fig. 10 shows the fuel injection amount control procedure. This procedure is implemented for specified intervals. Information on the internal engine operating state is input in step 81. According to the operating state, the basic fuel injection amount is calculated in step 82. The Tp is calculated by the ratio between engine speed Ne and the amount of sucked air Qa, as in Mathematical Expression 2. Note that K is a proportional constant.

$$Tp = K \times (Qa/Ne) \qquad \text{Mathematical Expression 2}$$

The air-fuel ratio sensor signal is input in step 83, and air-fuel ratio control amount $\alpha$ is obtained according to the result. Fig. 11 shows the relationship between the $\alpha$ and air-fuel ratio sensor signal. Fuel injection amount Ti is calculated in step 85. Ti is obtained from the product between the Tp and $\alpha$, as in Mathematical Expression 3. COEF represents a compensation coefficient to be set in conformity to coolant temperature or the like.

Ts denotes an injector characteristic compensation item.

$$Ti = COEF \times Tp \times \alpha + Ts \qquad \text{Mathematical Expression 3}$$

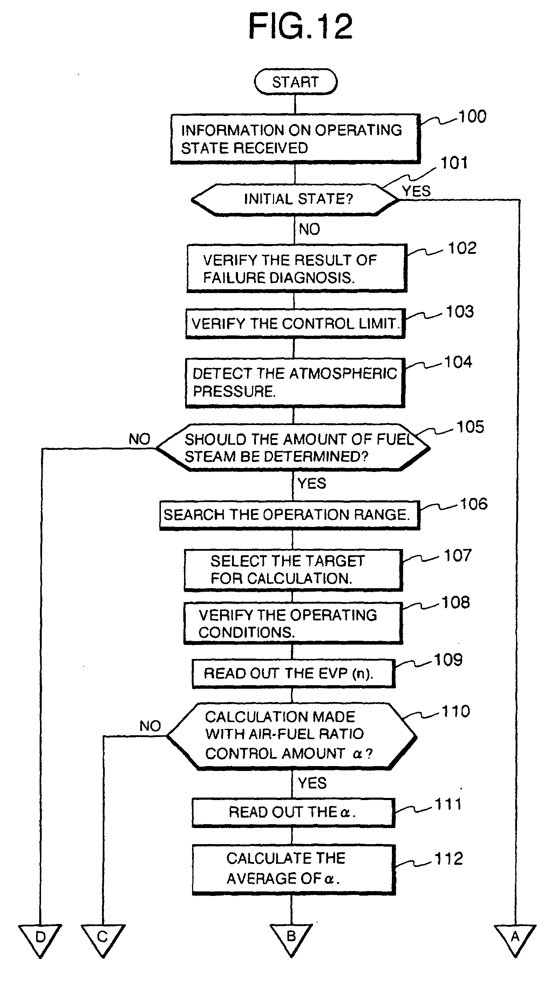

The following describes the procedure to calculate the amount of fuel steam with reference to Figs. 12, 13 and 14. This procedure is repeatedly implemented at specified intervals of time. Information on the internal engine operating state is input in step 100, as in the case of step 81. This can be determined, for example, depending on whether this procedure is implemented for the first time or not.

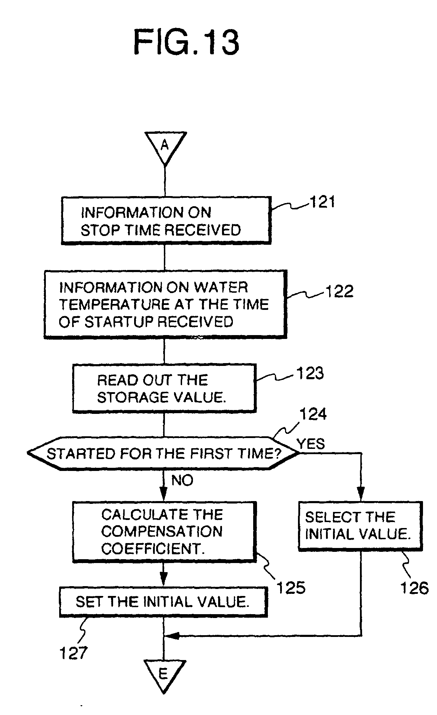

When it has been determined in step 101 that the state is initial, the control proceeds to step 121 in Fig. 13. Step 121 receives the information on the time ($T_{down}$) elapsed after the system power is turned off. The $T_{down}$ can be measured, for example, by reading the terminal voltage of the integrating circuit charged by system power when the system power turns on and starts. Needless to say, the present invention is not restricted to this process only. Step 122 receives information on water temperature at the time of startup. Then step 123 reads the storage value in non-volatile memory of fuel steam (EVPMEM (n)). This value is set once to the amount of fuel steam (EVP (n)). The "n" in (EVPMEM (n)) and (EVP (n)) denote the identifier in the operation range. The contexts of steps 121 to 123 are not important; actual computer program is not necessarily implemented according to its order.

Step 124 confirms whether the operation is implemented for the first time or not. This is determined by whether the $T_{down}$ obtained in step 121 is sufficiently long or not. It can also be determined, for example, by whether the TWs obtained in step 122 is a sufficiently low temperature or not. When it has been determined in step 124 that the operation is implemented for the first time, the control proceeds to step 126 to select the initial value for the amount of fuel steam. This is gained by setting the EVP (n) to the value preset in conformity to the information on water temperature at the time of startup obtained in step 122.

Namely, it is set to the following:

$$EVP (n) = f (TWs) \qquad \text{Mathematical Expression 4}$$

When it has been determined in step 124 that the operation is not implemented for the first time, the control proceeds to step 125. State of fuel steam is estimated when the engine is stopped, thereby calculating the compensation coefficient required to set the initial value of the EVP (n). For example, this compensates for the EVP (n) as the functions of the $T_{down}$ and TWs. That is, calculation is made as follows:

$$EVP (n) = EVP (n) \times f (T_{down}) \times f (TWs) \qquad \text{Mathematical Expression 5}$$

This is set as the initial value in step 127.

When it has been determined in step 101 that the state is not initial, the control proceeds to step 102, where verification is made to see if there is failure in the sensor and the like to detect the operating state of the internal engine or the actuator or the like to control the internal engine.

Then step 103 checks if the air-fuel ratio control amount $\alpha$ or fuel injection amount Ti is at the control limit or not. Then atmospheric pressure is detected in step 104. This may be known from the detection value of an atmospheric pressure sensor installed on the system, or from the internal inference/calculation value. The contexts of steps 102 to 104 are not important; actual computer program is not necessarily implemented according to its order.

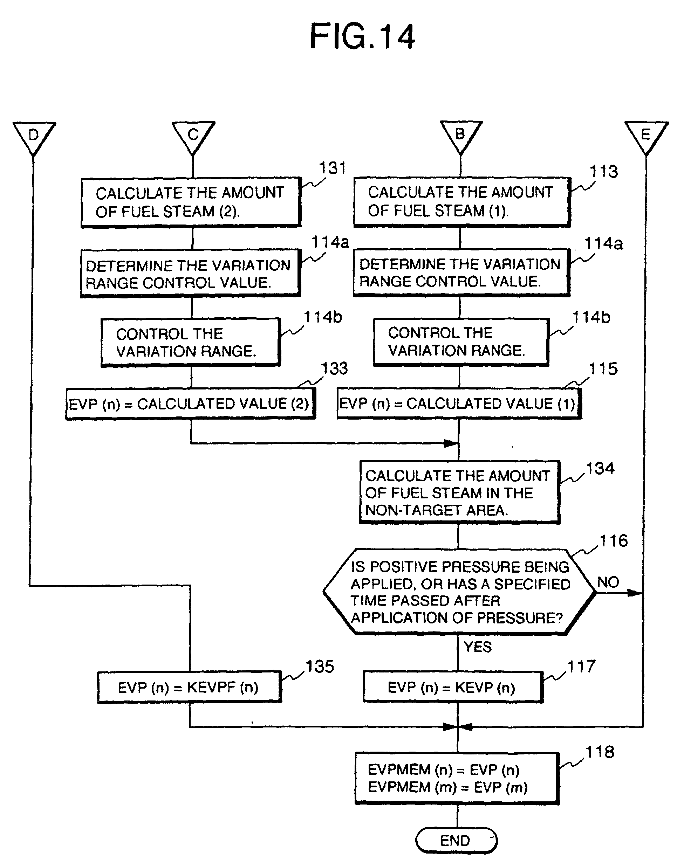

Step 105 determines whether fuel steam should be calculated or not. This is determined by whether various failures and control limits obtained in steps 102 to 104 have been found or reached, or whether the atmospheric pressure is extremely low. When it has been determined that fuel steam should not be calculated, the control proceeds to step 135 in Fig. 14, where the EVP (n) is set to fail-safe state KEVPF (n). This is designed to permit selection of different fail-safe values according to different areas.

When it has been determined that fuel steam should be calculated, the control proceeds to step 106 to select the EVP (n) corresponding to the current operation area to be calculated. Then step 108 determines whether or not the current operating state permits calculation of the fuel steam amount using the air-fuel ratio control amount $\alpha$. This is to verify the stability in the current operation area, and is intended to check if such variation ranges for engine speed, load, throttle position and the like are within the specified range. At the same time, it verifies if learning control of air-fuel ratio control is sufficiently performed or not, and the air-fuel sensor is already actuated or not. Then step 109 reads out the value of the EVP (n) selected at step 107.

Based on the result of verification made in the previous step 108, the step 110 determines whether the fuel steam amount can be calculated using the air-fuel ratio control amount a. When it has been determined that this is possible, the control proceeds to step 111 to read out the a first. Then it calculates the average ($\alpha$ ave) of a in order to average the calculation value This can be done, for example, by sampling the a at specified intervals of time and calculating the average value of them. This is also possible by calculating the average value of peak values when P components are generated when the classical PI control is used for air-fuel ratio control. Then the EVP (n) is calculated using the a ave in step 113. Namely, when the a ave is a compensatory coefficient and operation is made centering on 1.0, it is obtained by using the deviation from that central value, as shown in the following expression:

$$EVP \ (n) = 1.0 - \alpha \ ave \geq 0 \qquad\qquad \text{Mathematical Expression 6}$$

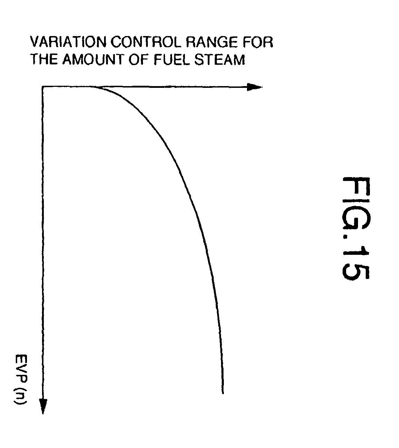

Here the fuel steam has the air-fuel ratio shifted toward "rich" side. Accordingly, so long as this expression is used, the EVP (n) cannot be a negative value. Accordingly, the minimum restriction is given at zero to ensure that calculation value will be zero. Then the value gained from Mathematical Expression 6 has its variation range controlled to ensure that the change from the previous value will not be excessively large. Firstly, the variation control value is obtained in step 114a. This can be determined as shown in Fig. 15, for example, in conformity to the previous EVP (n). It can be determined, for example, in conformity to the parameters including the deviation from the central value of a, the amount of purge control and atmospheric pressure which may affect the generation of fuel steam. Comparison is made between the value (1) calculated in step 113 and the previous EVP (n); when the difference is greater than the control value determined in step 114a, the variation range is controlled in step 114b to ensure that the difference will be kept below the control value. The value gained in this manner is held in step 115 as the EVP (n). As a result of this procedure, the initial value gained in steps 125 and 126 or the amount of fuel steam calculated from the operation state of the internal engine (to be described later) can be rewritten into the value calculated with the $\alpha$.

When it has been determined in step 110 that calculation is not made with air-fuel ratio control amount $\alpha$, the control proceeds to step 131, the amount of fuel steam is calculated according to the quantity of state of the internal engine 1. As the purge control amount and negative pressure of the suction system are increased, the amount to be purged will be increased and the amount of fuel steam stored in the canister will be reduced. Accordingly, the deviation of the $\alpha$ is compensated, using the parameters, as shown in the following expression:

$$EVP(n) = EVP(n)_{(i-1)} + (1.0 - \alpha) \times Kf \qquad\qquad \text{Mathematical Expression 7}$$

$$Kf = f \ (Qa, \ CPD) \qquad\qquad \text{Mathematical Expression 8}$$

where CPD represents purge control amount, and EVP $(n)_{(i-1)}$ the previous value of EVP (n).

The previous value of EvP (n) is used, as stated above. So the value calculated with $\alpha$ up to the previous time is necessarily used as an initial value in calculation value EVP $(n)_{(i-1)}$; therefore, continuity of the EVP (n) is not lost, even if there is a state change as in cases where $\alpha$ is used for the previous value (evaluation in step 110: YES) but not used for the current value (evaluation in step 110: NO).

In steps 114a and 114b, the variation range is controlled as in the above case, and the value calculated in this manner is held as EVP (n) in step 133.

In step 134, compensation is made for the EVP (n) of the operation range (m) which is not the target of the current calculation. This makes it possible to avoid the problem of a big discrepancy occurring to the EVP (n) to be read out, even when there is a change in the operation range. An example of this compensation is given below. This can be realized when the amount times the specified coefficient (Kc) for the change of the EVP (n) in the area (n) as a target for the current calculation as shown below is reflected in the EVP (n) in the area (n) which is not a target for the current calculation. Needless to say, the present invention is not restricted to this process only.

$$EVP(m)_{(i)} = EVP(m)_{(i-1)} + Kc \times \{(EVP(n)_{(i)} - EvP(n)_{(i-1)}\} \qquad \text{Mathematical Expression 9}$$

Next, step 116 determines whether or not the positive pressure is applied to the diagnosis of the purge pipe system, or time is within the specified time after application of the pressure; that is, it evaluates whether positive pressure remains in the purge pipe system or not. When it has been determined that positive pressure still remains, the control proceeds to step 117, and it is set to the specified value KEVP (n). In this way, the amount of fuel steam is forcibly set to a great value; by referencing this value, the state is preset to the state where a great amount of fuel steam is generated, in the control where control characteristics are adjusted appropriately, thereby preparing for purge restart.

After steps 135 and 117, EVP (n) and EVP (m) calculated in the above procedure are stored in the nonvolatile memories EVPMEM (n) and EVPMEM (m), respectively, thereby terminating the procedure of calculating the amount of fuel steam.

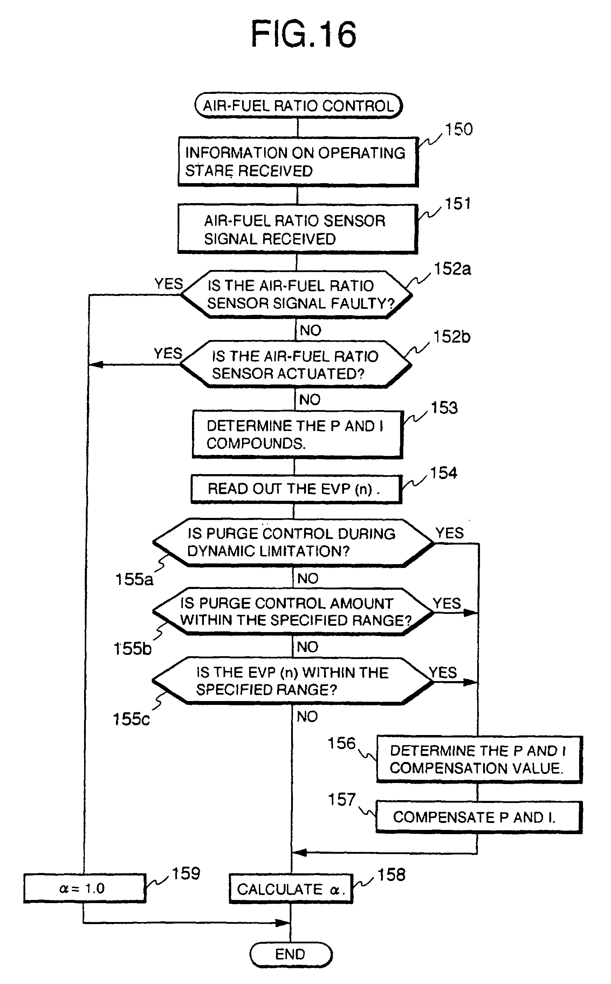

The following describes the air-fuel ratio control with reference to Fig. 16. This procedure is implemented at specified intervals of time. First, step 150 receives the information on the operation state of internal engine, similar to the above mentioned steps 41, 81 and 100. Then step 151 receives the air-fuel ratio sensor signal; it is determined in step 152a to see if the signal is faulty due to wire breakdown or short circuiting, as in the case of step 66. When it has been determined that it is faulty, or that the air-fuel ratio sensor is not actuated in step 152b, the control proceeds to step 159, where air-fuel ratio control amount α is set to 1.0, thereby terminating the processing of air-fuel ratio control.

"Stop" of air-fuel ratio control means in this Specification means that there is no sequential compensation of air-fuel ratio control amount α in conformity to the output signal from air-fuel ratio sensor 7; it does not signify the condition where the air-fuel ratio control amount a is not set and air-fuel ratio of the mixed gas is not controlled at all.

Step 152b verifies to see if the air-fuel ratio sensor is actuated or not; that is, it makes evaluation to see if the air-fuel ratio control can be started or not. For example, coolant temperature of the internal engine and time elapsed after startup, in addition to the air-fuel ratio sensor itself, can be used.

When step 152a has determined that air-fuel ratio sensor is not faulty, and step 152b has determined that the air-fuel ratio sensor is actuated, the control proceeds to step 153 to start air-fuel ratio control.

Step 153 determines the air-fuel ratio control speed value (P, I) which serves as a standard. Then step 154 reads out the EVP (n) calculated in Figs. 12 to 14. Step 155a determines whether the air-fuel ratio control characteristic should be changed or not, when dynamic limitation is working in the previous purge control. Furthermore, step 155b determines whether or not the above mentioned purge control amount is within the specified range, and whether or not air-fuel ratio control characteristic should be changed or not. Furthermore, step 155c determines whether or not above mentioned the amount of fuel steam EVP (n) is within the specified value range, and whether or not air-fuel ratio control characteristic should be changed since the amount of fuel steam have an influence on air-fuel ratio control.

If it has been determined in any of the above mentioned steps 155a, 155b and 155c that air-fuel ratio control characteristic should be changed, the control proceeds to step 156, and determines to what extent the P and I components of air-fuel ratio control speed value should be compensated in each case. Using that compensation value, P and I components are compensated in step 157, and air-fuel ratio control amount a is set in step 158 according to the value, thereby terminating the processing of air-fuel ratio control.

When it has been determined in any of the above mentioned steps 155a, 155b and 155c that air-fuel ratio control characteristic should not be changed, air-fuel ratio control amount a is set in step 158 without any compensation, thereby terminating the processing of air-fuel ratio control.

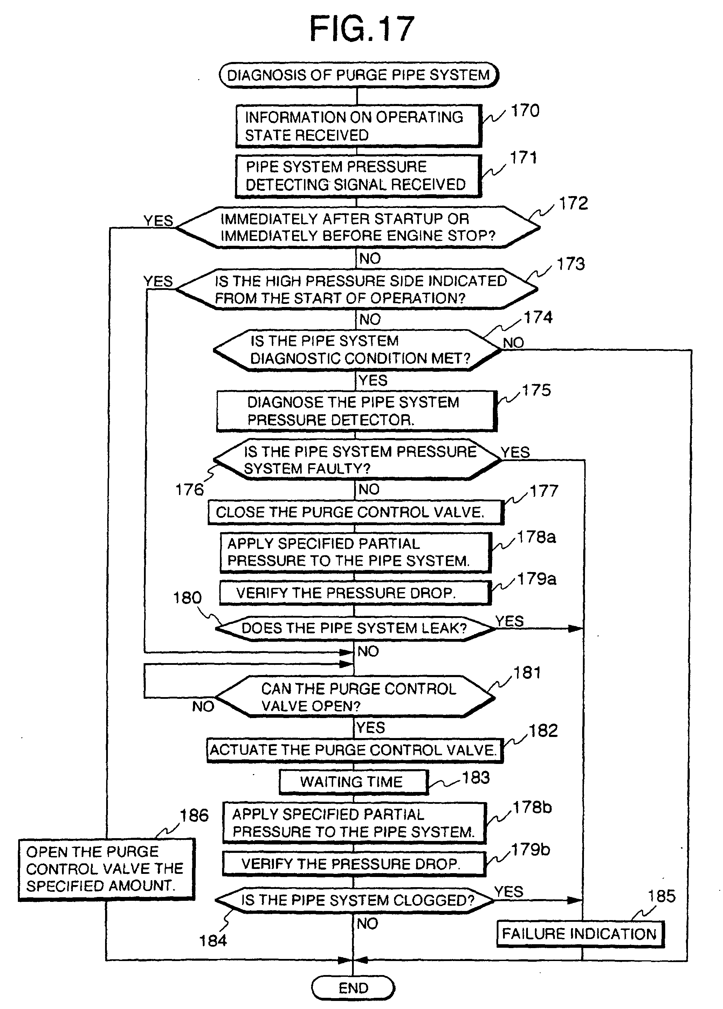

The following describes the diagnostic procedure of the purge pipe system with reference to Fig. 17. The procedure described here represents the flow of a series of procedures and operations for this diagnosis; actual computer program flow is not necessarily formed accordingly.

First, the information on the operation state of the internal engine is input in step 170, as in the case of steps 41, 81, 100 and 150. Then step 171 receives the signal showing the pressure of the purge pipe system. This can be, for example, the pressure sensor signal representing the pressure or the switch signal which is reversed at the specified pressure. Then step 172 determines whether or not this is immediately after the startup of the internal engine 1 or immediately before stop. If so, the control proceeds to step 186, the purge control valve 13 is opened the specified amount. This allows the positive pressure remaining in the purge pipe system to be released into the internal engine 1, and prevents fuel steam from being released directly into the atmosphere.

When step 172 determines that the time is neither immediately after the startup of the internal engine 1 nor immediately before stop, the control proceeds to step 173. When step 173 has determined that the pipe system pressure signal received in step 171 indicates the high pressure side from the beginning of the operation of the internal engine 1, the control proceeds to step 181, thereby skipping diagnosis of the leakage from the pipe system. This prevents the possibility of diagnostic error for the pipe system leakage due to residual pressure.

When step 173 has determined that it does not indicate the high pressure side from the beginning of the operation, evaluation is made to determine if the diagnostic conditions for the purge pipe system are met or not. This is determined, for example, by whether or not the load and speed of the internal engine 1, throttle position and coolant water temperature are within the specified value range. When it has been determined that diagnostic conditions are not met, diagnosis is terminated as it is. Conversely, when it has been determined that diagnostic conditions are met, the control proceeds to step 175, to diagnose if there is any failure to the pressure detector 20 of the pipe system. This makes it possible diagnose if the output signal indicates wire breakdown or short circuiting, for example, when the pressure detector 20 of the pipe system is a pressure sensor indicating the pressure. Diagnosis is made by verifying if the pressure gauge can turn on or off correctly in the case of the signal which is reversed at the specified pressure. Based on the result of diagnosis, when it has been determined in step 176 that pressure detector is faulty, the control proceeds to step 185.

If step 176 determines that there is no failure in the pressure detector 20 of the pipe system, the control proceeds to step 117, and purge control valve 13 is closed. Step 177 is not necessarily required if it is definitely ensured that purge control valve 13 is closed for another reasons, for example, if purge control is not started because the secondary air pump 18 is actuated and the air-fuel ratio control is stopped; therefore, the purge control valve 13 is definitely closed. Pressure is applied to the pipe system in step 178a for the required amount. For this purpose, pressure pump 14 may be operated for a specified time, or operation may be continued until pressure detector 20 of the pipe system indicates the specified value. After the pressure is stopped, step 179a verifies how the pressure drops. This verification may be made, for example, measuring the time required for the pressure to drop by a specified amount, or by measuring the amount of pressure dropped within the specified time. When the pressure drop is greater than the specified value, step 180 determines that there is leakage in the pipe system, and the control proceeds to step 185.

If step 180 determines there is no leakage in the pipe system, the control proceeds to step 181 to determine if the purge control valve can be opened or not. Namely, if the purge control valve 13 is closed for another reason, for example, for the reason that purge control is not started because the secondary air pump 18 is actuated and the air-fuel ratio control is stopped, then evaluation is made to determine whether or not such a reason can be reset and the purge control valve 13 can be opened.

If step 181 has determined that the purge control valve 13 can be opened, the control proceeds to step 182 to energize the purge control valve 13. Then after the lapse of the time specified in step 183, clogging test of the pipe system is conducted. In the clogging test, pressure is applied to the pipe system in step 178b, similar to the case in step 178a. Verification is made to determine how the pressure has dropped in step 179b, similar to the case in step 179a. When the pressure drop is smaller than the specified value, step 184 determines that the pipe system is clogged, and the control proceeds to step 185.

Failure indication is given by failure alarm lamp 19, based on the diagnosis made in any of the above mentioned steps 176, 180 and 184 to determine that there is failure. When step 184 determines that the pipe system is not clogged, a series of procedures are terminated.

According to the present embodiment, pressure detector 20 of the pipe system is diagnosed in step 175 when pipe system diagnostic conditions are met, thereby ensuring highly reliable diagnosis.

The present invention provides accurate calculation of the amount of fuel steam stored in the canister or the amount of fuel steam supplied to the internal engine from the canister, and ensures the characteristics for the optimum purge control, internal engine control and air-fuel ratio control in conformity to said values. It also ensures diagnosis to be implemented without deteriorating the controllability of the internal engine, when diagnosing failure by applying pressure to the purge pipe system. This ensures control of the internal engine with minimum changes in air-fuel ratio, and at the same time, allows failure to be detected in the purge pipe system without misjudgment.

**Claims**

1. An internal combustion engine controller comprising:

   (a) a fuel tank (11);
   (b) a canister (12) to store fuel steam;
   (c) a purge pipe system leading from said fuel tank (11) to an air suction system of the internal combustion engine (1) via said canister (12),
   (d) a purge control means acting on a purge control valve (13) installed in said purge pipe system and controlling the volume of fuel steam to be supplied to said engine (1);

(e) an internal combustion engine operating state detecting means to detect the operating state of the engine (1);

(f) an internal combustion engine control means (6) to control the engine according to said operating states;

(g) an air-fuel ratio detecting means (7) to detect an air-fuel ratio of mixed fuel gas supplied to said engine (1); and

(h) an air-fuel ratio control means to control said air-fuel ratio to a target ratio by an air-fuel ratio control amount according to the result of detecting said air-fuel ratio;

**characterized in that** said internal combustion engine controller (6) comprises

-   a first calculation means which uses the deviation from a fixed value of said control amount of said air-fuel control means, which is a predetermined value for controlling the air-fuel ratio in accordance with the operating state of the engine to said target ratio, to calculate at least one of the amount of fuel steam stored in said canister (12) and the amount of the fuel steam supplied to said engine (1), when the purge control valve (13) is open and said combustion engine (1) is at a specified operating state; and
-   a second calculation means to calculate the amount of fuel steam stored in said canister (12) or the amount of the fuel steam supplied to said engine (1) according to at least any one of a control amount of said purge control means and said engine operating state detection value, when said engine (1) is not at said specified operating state.

2.  An internal combustion engine controller according to claim 1, **characterized in that** said internal engine (1) is at the specified operating state and the amount of fuel steam EVP(n) in the operation range n is calculated according to the equation

$$EVP(n) = 1 - \alpha \, ave \geq 0,$$

wherein $\alpha$ ave denotes the average value of said air-fuel ratio control amount.

3.  An internal combustion engine controller according to Claim 2 **characterized in that** the initial value of second calculation by said second calculation means is the result of said first calculation.

4.  An internal combustion engine controller according to Claim 3 **characterized in that** the operating state shifts to said specified operating state during calculation by said second calculation means, and, when calculation is made by said first calculation means, the result of said second calculation is replaced by the result of calculation by said first calculation means implemented after said shift.

5.  An internal combustion engine controller according to any one of Claims 2 to 4 **characterized in that** one fuel steam amount is derived from the result of said first calculation and that of said second calculation.

6.  An internal combustion engine controller according to any one of Claims 1 to 5 **characterized in that** the operation range of said internal engine (1) is divided into a plurality of portions comprising any of the engine load, engine speed and throttle position, and each of said calculation means is used for each of a plurality of operation ranges, thereby obtaining the amount of said fuel steam corresponding to each of said operation ranges.

7.  An internal combustion engine controller according to Claim 6 **characterized in that**, when the results of said first and second calculations corresponding to said operation range by said calculation means has been obtained in the operation range divided into a plurality of parts or when said amount of fuel steam was obtained, said internal combustion controller compensates for said amount of stored fuel steam or said amount of supplied fuel steam corresponding to the operation range other than said range according to these values.

8.  An internal combustion engine controller according to any one of Claims 6 and 7 **characterized in that** storage area is reserved in the non-volatile memory corresponding to said plurality of operation range; said amount of fuel steam calculated in each of said operation ranges is stored in said storage area corresponding to each operation range; and said calculation is implemented by using the read-out value for the stored amount in the operation in said operation range, thereby obtaining the amount of fuel steam.

**9.** An internal combustion engine controller according to any one of claims 1 to 8, **characterized in that** said internal combustion controller (6) comprises a variation control means to keep the variations in said calculation result or said amount of fuel steam within a specified variation range when obtaining said first calculation result by said first calculation means or when obtaining said amount of fuel steam.

**10.** An internal combustion engine controller according to any one of claims 1 to 9, **characterized in that** variations controlled by said variation control means are determined by calculation factor(s) further comprising at least any of the physical parameters affecting said calculation results, said amount of fuel steam, said fuel engine operations, control amount by said air-fuel ratio control means, control amount by said purge control means, and amount of said fuel steam generated.

**11.** An internal combustion engine controller according to any one of claims 1 to 10, **characterized in that** said internal combustion engine controller (6) further comprises a means to change control characteristics of any one of purge control valve speed, purge control valve position, and air-fuel ratio control speed, in conformity to said first and second calculation results or said amount of fuel steam.

**12.** An internal combustion engine controller according to any one of claims 2 to 11, **characterized in that** said purge control valve (13) is controlled in the direction of opening by said purge control means, and characteristics of said air-fuel ratio control means are changed and controlled according to at least any one of said first and second calculation results and said mount of fuel steam, when the amount of fuel steam supplied to said internal engine (1) is increased.

**13.** An internal combustion engine controller according to any one of Claims 1 to 12 **characterised in that** said internal combustion engine controller (6) further comprises a purge control means to raise the internal pressure of said purge pipe system through part of said purge pipe system with said purge control valve (13) kept closed, and provides specified restriction or compensation to said calculation results by first calculation means or said amount of fuel steam in conformity to the operation of the pressurizing means of said purge pipe system.

**14.** An internal combustion engine controller according to any one of Claims 1 to 13 **characterized in that** said internal combustion engine controller (6) comprises a means to detect at least any one of the environmental condition parameters for said fuel tank (11), canister (12) and purge pipe system, as well as fuel condition parameters, and provides restriction to said calculation means in conformity to said detection or compensates for at least any one of said first and second calculation results or said amount of fuel steam.

**15.** An internal combustion engine controller according to any one of Claims 1 to 14 **characterized in that** said internal combustion engine controller (6) further comprises a means to change control characteristics of any one of purge control valve speed, purge control valve position, and air-fuel ratio control speed, in conformity to said first and second calculation results or said amount of fuel steam.

**16.** An internal combustion engine controller according to any one of Claims 1 to 15 **characterized in that** said internal combustion engine controller (6) further comprises:

(a) a reduced speed fuel shutoff means to shut off fuel supply to said internal engine wherein said fuel shutoff means to shut off the fuel a specified time after detecting the speed reduction, and determines whether or not said purge control valve (13) should be set to the purge shutoff condition during said specified period of time in conformity to at least any one of said first and second calculation results or said amount of fuel steam; and
(b) a means to set said purge control amount to the purge shutoff condition according to said determination.

**Patentansprüche**

**1.** Steuereinrichtung für einen Verbrennungsmotor, die aufweist:

(a) einen Kraftstofftank (11);
(b) einen Behälter (12), um Kraftstoffdampf aufzunehmen;
(c) ein Ableitungs-Rohrsystem, das von dem Kraftstofftank (11) über den Behälter (12) zu einem Luftansaugsystem des Verbrennungsmotors (1) führt;
(d) ein Ableitungs-Steuerungsmittel, das auf ein in dem Ableitungs-Rohrsystem installiertes Ableitungs-Steuerungsventil (13) wirkt und das an den Motor (1) zu liefernde Volumen von Kraftstoffdampf steuert;

(e) ein Erfassungsmittel für einen Betriebszustand des Verbrennungsmotors, um den Betriebszustand des Motors (1) zu erfassen;

(f) ein Steuerungsmittel (6) für den Verbrennungsmotor, um den Motor gemäß den Betriebszuständen zu steuern;

(g) ein Luft-Kraftstoff-Verhältnis-Erfassungsmittel (7), um ein Luft-Kraftstoff-Verhältnis eines an den Motor (1) gelieferten Kraftstoffgasgemisches zu erfassen; und

(h) ein Luft-Kraftstoff-Verhältnis-Steuerungsmittel, um das Luft-Kraftstoff-Verhältnis durch eine Steuerungsgröße des Luft-Kraftstoff-Verhältnisses auf ein Soll-Verhältnis gemäß dem Ergebnis des Erfassens des Luft-Kraftstoff-Verhältnisses zu steuern;

**dadurch gekennzeichnet, dass** die Verbrennungsmotor-Steuereinrichtung (6) aufweist

ein erstes Berechnungsmittel, das die Abweichung von einem festgelegten Wert der Steuerungsgröße des Luft-Kraftstoff-Steuerungsmittels, der ein vorbestimmter Wert zum Steuern des Luft-Kraftstoff-Verhältnisses gemäß dem Betriebszustand des Motors zu dem Soll-Verhältnis ist, verwendet, um die Menge des in dem Behälter (12) aufgenommenen Kraftstoffdampfes und/oder die Menge des an den Motor (1) gelieferten Kraftstoffdampfes zu berechnen, wenn das Ableitungs-Steuerungsventil (13) geöffnet ist und sich der Verbrennungsmotor (1) in einem vorgegebenen Betriebszustand befindet; und

ein zweites Berechnungsmittel, um die Menge des in dem Behälter (12) aufgenommenen Kraftstoffdampfes oder die Menge des an den Motor (1) gelieferten Kraftstoffdampfes gemäß einer Steuerungsgröße des Ableitungs-Steuerungsmittels und/oder des Motor-Betriebszustands-Erfassungswertes zu berechnen, wenn sich der Motor ( 1 ) nicht in dem vorgegebenen Betriebszustand befindet.

2. Steuereinrichtung für einen Verbrennungsmotor gemäß Anspruch 1, **dadurch gekennzeichnet, dass** sich der Verbrennungsmotor (1) in einem vorgegebenen Betriebszustand befindet und die Menge des Kraftstoffdampfes EVP(n) in dem Betriebsbereich n gemäß der Gleichung

$$EVP(n) = 1 - \alpha \text{ ave} \geq 0$$

berechnet wird, wobei $\alpha$ ave den Mittelwert der Steuerungsgröße des Luft-Kraftstoff-Verhältnisses darstellt.

3. Steuereinrichtung für einen Verbrennungsmotor gemäß Anspruch 2, **dadurch gekennzeichnet, dass** der Anfangswert einer zweiten Berechnung durch das zweite Berechnungsmittel das Ergebnis der ersten Berechnung ist.

4. Steuereinrichtung für einen Verbrennungsmotor gemäß Anspruch 3, **dadurch gekennzeichnet, dass** sich der Betriebszustand während der Berechnung durch das zweite Berechnungsmittel zu dem vorgegebenen Betriebszustand hin verschiebt, und, wenn eine Berechnung von dem ersten Berechnungsmittel durchgeführt wird, das Ergebnis der zweiten Berechnung durch das Ergebnis einer Berechnung durch das erste Berechnungsmittel ersetzt wird, welches nach der Verschiebung implementiert wird.

5. Steuereinrichtung für einen Verbrennungsmotor gemäß einem der Ansprüche 2 bis 4, **dadurch gekennzeichnet, dass** eine Kraftstoffdampfmenge von dem Ergebnis der ersten Berechnung und dem Ergebnis der zweiten Berechnung abgeleitet wird.

6. Steuereinrichtung für einen Verbrennungsmotor gemäß einem der Ansprüche 1 bis 5, **dadurch gekennzeichnet, dass** der Betriebsbereich des Verbrennungsmotors (1) in eine Vielzahl von Teilbereiche unterteilt ist, welche der Motorlast, der Motordrehzahl und der Drosselklappen-Stellung entsprechen, und dass jedes der Berechnungsmittel für jeden einer Vielzahl von Betriebsbereichen verwendet wird, wodurch die jedem der Betriebsbereiche entsprechende Menge des Kraftstoffdampfes erhalten wird.

7. Steuereinrichtung für einen Verbrennungsmotor gemäß Anspruch 6, **dadurch gekennzeichnet, dass**, wenn die Ergebnisse der ersten und zweiten Berechnungen von den Berechnungsmitteln entsprechend des Betriebsbereiches in dem in eine Vielzahl von Teilbereiche unterteilten Betriebsbereich erhalten wurden, oder, wenn die Menge des Kraftstoffdampfes erhalten wurde, die Verbrennungs-Steuereinrichtung die Menge aufgenommenen Kraftstoffdampfes oder die Menge zugeführten Kraftstoffdampfes entsprechend dem Betriebsbereich, außer dem Bereich gemäß diesen Werten, kompensiert.

**8.** Steuereinrichtung für einen Verbrennungsmotor gemäß einem der Ansprüche 6 oder 7, **dadurch gekennzeichnet, dass** ein Speicherbereich in dem nichtflüchtigen Speicher entsprechend der Vielzahl der Betriebsbereiche reserviert ist; die in jedem der Betriebsbereiche berechnete Menge des Kraftstoffdampfs in dem jedem Betriebsbereich entsprechenden Speicherbereich gespeichert ist; und die Berechnung durchgeführt wird, indem der ausgelesene Wert für die aufgenommene Menge bei Betrieb in dem Betriebsbereich verwendet wird, wodurch die Menge des Kraftstoffdampfs erhalten wird.

**9.** Steuereinrichtung für einen Verbrennungsmotor gemäß einem der Ansprüche 1 bis 8, **dadurch gekennzeichnet, dass** die Verbrennungs-Steuereinrichtung (6) ein Schwankungssteuerungsmittel aufweist, um die Schwankungen in dem Berechnungsergebnis oder der Menge von Kraftstoffdampf innerhalb eines vorgegebenen Schwankungsbereiches zu halten, wenn das erste Berechnungsergebnis von dem ersten Berechnungsmittel erhalten wird, oder, wenn die Menge von Kraftstoffdampf erhalten wird.

**10.** Steuereinrichtung für einen Verbrennungsmotor gemäß einem der Ansprüche 1 bis 9, **dadurch gekennzeichnet, dass** von dem Schwankungssteuerungsmittel gesteuerte Schwankungen durch einen Berechnungsfaktor oder mehrere Berechnungsfaktoren ermittelt werden, der/die ferner zumindest einen der physikalischen Parameter aufweist/aufweisen, welche die Berechnungsergebnisse, die Menge von Kraftstoffdampf, die Betriebsvorgänge des Kraftstoffmotors, die Steuerungsgröße des Luft-Kraftstoff-Steuerungsmittels, die Steuerungsgröße des Ableitungs-Steuerungsmittels und die Menge des erzeugten Kraftstoffdampfes beeinflussen.

**11.** Steuereinrichtung für einen Verbrennungsmotor gemäß einem der Ansprüche 1 bis 10, **dadurch gekennzeichnet, dass** die Steuereinrichtung (6) des Verbrennungsmotors ferner ein Mittel aufweist, um Charakteristiken der Steuerung der Geschwindigkeit des Ableitungs-Steuerungsventils, der Stellung des Ableitungs-Steuerungsventils und/oder der Steuerungsgeschwindigkeit des Luft-Kraftstoff-Verhältnis in Übereinstimmung mit den ersten und zweiten Berechnungsergebnissen oder der Menge von Kraftstoffdampf zu ändern.

**12.** Steuereinrichtung für einen Verbrennungsmotor gemäß einem der Ansprüche 2 bis 11, **dadurch gekennzeichnet, dass** das Ableitungs-Steuerungsventil (13) in der Öffnungsrichtung der Ableitungs-Steuerungsmittel gesteuert wird, und Charakteristiken des Luft-Kraftstoff-Verhältnis-Steuerungsmittels gemäß dem ersten Berechnungsergebnis, dem zweiten Berechnungsergebnis und/oder der Menge von Kraftstoffdampf verändert und gesteuert werden, wenn die Menge von an den Verbrennungsmotor (1) geliefertem Kraftstoffdampf erhöht wird.

**13.** Steuereinrichtung für einen Verbrennungsmotor gemäß einem der Ansprüche 1 bis 12, **dadurch gekennzeichnet, dass** die Steuereinrichtung (6) des Verbrennungsmotors ferner ein Ableitungs-Steuerungsmittel aufweist, um den Innendruck des Ableitungs Rohrsystems durch einen Teil des Ableitungs-Rohrsystems mit dem geschlossenen gehaltenen Ableitungs-Steuerungsventil (13) zu erhöhen, und eine vorgegebene Beschränkung oder Kompensation der Berechnungsergebnisse durch das erste Berechnungsmittel oder der Menge von Kraftstoffdampf in Übereinstimmung mit dem Betrieb des für den Druck verantwortlichen Mittels des Ableitungs-Rohrsystems vorsieht.

**14.** Steuereinrichtung für einen Verbrennungsmotor gemäß einem der Ansprüche 1 bis 13, **dadurch gekennzeichnet, dass** die Steuereinrichtung (6) des Verbrennungsmotors ein Mittel aufweist, um zumindest einen der Umgebungsbedingungsparameter für den Kraftstofftank (11), den Behälter (12) und das Ableitungs-Rohrsystem, sowie Kraftstoffbedingungsparameter zu erfassen, und eine Beschränkung für das Berechnungsmittel in Übereinstimmung mit der Erfassung vorsieht oder das erste Berechnungsergebnis, das zweite Berechnungsergebnis und/oder die Menge von Kraftstoffdampf kompensiert.

**15.** Steuereinrichtung für einen Verbrennungsmotor gemäß einem der Ansprüche 1 bis 14, **dadurch gekennzeichnet, dass** die Steuereinrichtung (6) des Verbrennungsmotors ferner ein Mittel aufweist, um Charakteristiken der Steuerung der Geschwindigkeit des Ableitungs-Steuerungsventils, der Stellung des Ableitungs-Steuerungsventils und/oder der Steuerungsgeschwindigkeit des Luft-Kraftstoff-Verhältnis in Übereinstimmung mit den ersten und zweiten Berechnungsergebnissen oder der Menge von Kraftstoffdampf zu ändern.

**16.** Steuereinrichtung für einen Verbrennungsmotor gemäß einem der Ansprüche 1 bis 15, **dadurch gekennzeichnet, dass** die Steuereinrichtung (6) des Verbrennungsmotors ferner aufweist:

(a) ein Kraftstoffzufuhr-Abstell-Mittel für verringerte Geschwindigkeit, um eine Kraftstoffzufuhr an den Verbrennungsmotor abzustellen, wobei das Kraftstoffzufuhr-Abstell-Mittel die Kraftstoffzufuhr nach einer vorgegebenen Zeit nach dem Erfassen der Geschwindigkeitsreduzierung abstellt und ermittelt, ob das Ableitungs-Steuerungsventil (13) während der vorgegebenen Zeitdauer in den Ableitungs-Abstell-Zustand in Übereinstimmung mit dem ersten Berechnungsergebnis, dem zweiten Berechnungsergebnis und/oder der Menge von Kraftstoffdampf versetzt werden soll oder nicht; und

(b) ein Mittel, um die Ableitungs-Steuerungsgröße auf die ermittelte Ableitungs-Abstell-Bedingung zu setzen.

**Revendications**

1. Une commande de moteur à combustion interne comprenant :

(a) un réservoir de carburant (11) ;
(b) un réservoir à charbon actif (12) pour stocker la vapeur de carburant ;
(c) un système de tuyau de purge partant dudit réservoir de carburant (11) vers un système d'aspiration d'air du moteur à combustion interne (1) via ledit réservoir à charbon actif (12) ;
(d) un dispositif de contrôle de purge agissant sur une soupape de contrôle de purge (13) installée dans ledit système de tuyau de purge et contrôlant le volume de vapeur de carburant devant alimenter ledit moteur (1) ;
(e) un dispositif de détection de l'état de fonctionnement du moteur à combustion interne pour détecter l'état de fonctionnement du moteur (1) ;
(f) un dispositif de commande du moteur à combustion interne (6) pour commander le moteur selon ledit état de fonctionnement ;
(g) un dispositif de détection du rapport air-carburant (7) pour détecter un rapport air-carburant du mélange combustible alimentant ledit moteur (1) ; et
(h) un dispositif de contrôle du rapport air-carburant pour contrôler ledit rapport air-carburant en fonction d'un rapport cible fixé par une valeur de contrôle du rapport air-carburant, selon le résultat de détection dudit rapport air-carburant ;

**caractérisée en ce que** ladite commande de moteur à combustion interne (6) comprend

un premier dispositif de calcul, utilisant l'écart par rapport à une valeur fixe de ladite valeur de contrôle dudit dispositif de contrôle air-carburant, qui est une valeur prédéterminée pour contrôler le rapport air-carburant selon l'état de fonctionnement du moteur en fonction du rapport cible, pour calculer au moins la quantité de vapeur de carburant stockée dans ledit réservoir à charbon actif (12) ou la quantité de vapeur de carburant alimentant ledit moteur (1), lorsque la soupape de contrôle de purge (13) est ouverte et que ledit moteur à combustion (1) se trouve dans un état de fonctionnement déterminé ; et
un deuxième dispositif de calcul pour calculer la quantité de vapeur de carburant stockée dans ledit réservoir à charbon actif (12) ou la quantité de vapeur de carburant alimentant ledit moteur (1) selon au moins une valeur de contrôle dudit dispositif de contrôle de purge ou ladite valeur de détection de l'état de fonctionnement du moteur, lorsque ledit moteur (1) ne se trouve pas dans ledit état de fonctionnement déterminé.

2. Une commande de moteur à combustion interne selon la revendication 1, **caractérisée en ce que** ledit moteur à combustion interne (1) se trouve dans l'état de fonctionnement déterminé et la quantité de vapeur de carburant EVP (n) dans le domaine de fonctionnement (n) est calculée selon l'équation suivante :

$$EVP\ (n) = 1 - \alpha\ \text{ave} \geq 0$$

dans laquelle $\alpha$ ave désigne la valeur moyenne de ladite valeur de contrôle du rapport air/carburant.

3. Une commande de moteur à combustion interne selon la revendication 2, **caractérisée en ce que** la valeur initiale du second calcul effectué par ledit second dispositif de calcul est le résultat dudit premier calcul.

4. Une commande de moteur à combustion interne selon la revendication 3, **caractérisée en ce que** l'état de fonctionnement évolue vers ledit état de fonctionnement déterminé durant le calcul effectué par le second dispositif de calcul, et, lorsque le calcul est effectué par ledit premier dispositif de calcul, le résultat dudit second calcul est remplacé par le résultat du calcul effectué par ledit premier dispositif de calcul après ledit passage d'un état de fonctionnement à l'autre.

5. Une commande de moteur à combustion interne selon l'une quelconque des revendications 2 à 4, **caractérisée**

en ce qu'une quantité de vapeur de carburant découle du résultat dudit premier calcul et de celui dudit second calcul.

6. Une commande de moteur à combustion interne selon l'une quelconque des revendications 1 à 5, **caractérisée en ce que** le domaine de fonctionnement dudit moteur à combustion interne (1) est divisé en plusieurs domaines comprenant la charge du moteur, le régime du moteur et la position du papillon, et chacun desdits dispositifs de calcul est utilisé pour chacun des domaines de fonctionnement, obtenant ainsi la quantité de ladite vapeur de carburant correspondant à chacun desdits domaines de fonctionnement.

7. Une commande de moteur à combustion interne selon la revendication 6, **caractérisée en ce que**, lorsque les résultats desdits premiers et seconds calculs correspondant audit domaine de fonctionnement et effectués par lesdits dispositifs de calcul ont été obtenus dans le domaine de fonctionnement divisé en plusieurs domaines ou lorsque ladite quantité de vapeur de carburant a été obtenue, ladite commande de moteur à combustion interne compense ladite quantité de vapeur de carburant stockée ou ladite quantité de vapeur de carburant alimentée correspondant au domaine de fonctionnement autre que ledit domaine selon ces valeurs.

8. Une commande de moteur à combustion interne selon l'une quelconque des revendications 6 à 7, **caractérisée en ce que** la zone de stockage est gardée dans la mémoire non volatile correspondant aux dits domaines de fonctionnement ; ladite quantité de vapeur de carburant calculée dans chacun desdits domaines de fonctionnement est stockée dans ladite zone de stockage correspondant à chacun des domaines de fonctionnement; et ledit calcul est exécuté en utilisant la valeur d'affichage pour la quantité stockée lors du fonctionnement dudit domaine de fonctionnement, en obtenant ainsi la quantité de vapeur de carburant.

9. Une commande de moteur à combustion interne selon l'une quelconque des revendications 1 à 8, **caractérisée en ce que** ladite commande de moteur à combustion interne (6) comprend un dispositif de contrôle des variations pour maintenir les variations dudit résultat de calcul ou de ladite quantité de vapeur de carburant dans un champ de variation spécifique lors de l'obtention dudit résultat du premier calcul obtenu par ledit premier dispositif de calcul ou lors de l'obtention de ladite quantité de vapeur de carburant.

10. Une commande de moteur à combustion interne selon l'une quelconque des revendications 1 à 9, **caractérisée en ce que** les variations contrôlées par ledit dispositif de contrôle des variations sont déterminées par un (des) facteur (s) de calcul comprenant également au moins l'un des paramètres physiques affectant lesdits résultats de calcul, ladite quantité de vapeur de carburant, lesdits fonctionnements du moteur à combustion, le montant de contrôle dudit dispositif de contrôle du rapport air-carburant, le montant de contrôle dudit dispositif de contrôle de purge, et la quantité de ladite vapeur de carburant générée.

11. Une commande de moteur à combustion interne selon l'une quelconque des revendications 1 à 10, **caractérisée en ce que** ladite commande de moteur à combustion interne (6) comprend également un dispositif pour changer les caractéristiques de contrôle de la vitesse de la soupape de contrôle de purge, de la position de la soupape de contrôle de purge ou de la vitesse de contrôle du rapport air-carburant conformément aux dits résultats des premiers et seconds calculs ou à ladite quantité de vapeur de carburant.

12. Une commande de moteur à combustion interne selon l'une quelconque des revendications 2 à 11, **caractérisée en ce que** ladite soupape de contrôle de purge (13) est contrôlée dans le sens de l'ouverture par ledit dispositif de contrôle de purge, et les caractéristiques dudit dispositif de contrôle du rapport air-carburant sont changées et contrôlées selon au moins lesdits résultats des premiers et seconds calculs ou ladite quantité de vapeur de carburant, lorsque la quantité de vapeur de carburant alimentant ledit moteur à combustion interne (1) augmente.

13. Une commande de moteur à combustion interne selon l'une quelconque des revendications 1 à 12, **caractérisée en ce que** ladite commande de moteur à combustion interne (6) comprend également un dispositif de contrôle de purge pour augmenter la pression interne dudit système de tuyau de purge par le biais d'une partie dudit système de tuyau de purge, ladite soupape de contrôle de purge (13) restant fermée, et limite ou compense de façon précise lesdits résultats de calcul effectués par le premier dispositif de calcul ou ladite quantité de vapeur de carburant en conformité avec le fonctionnement des dispositifs de mise en pression dudit système de tuyau de purge.

14. Une commande de moteur à combustion interne selon l'une quelconque des revendications 1 à 13, **caractérisée en ce que** ladite commande de moteur à combustion interne (6) comprend un dispositif pour détecter au moins l'un des paramètres des conditions ambiantes pour ledit réservoir de carburant (11), ledit réservoir à charbon actif (12) et ledit système de tuyau de purge, ainsi que les paramètres des conditions ambiantes du carburant, et impose des limites aux dits dispositifs de calcul en conformité avec ladite détection ou compense au moins lesdits résultats des premiers et seconds calculs ou ladite quantité de vapeur de carburant.

15. Une commande de moteur à combustion interne selon l'une quelconque des revendications 1 à 14, **caractérisée en ce que** ladite commande de moteur à combustion interne (6) comprend également un dispositif pour changer les caractéristiques de contrôle de la vitesse de la soupape de contrôle de purge, de la position de la soupape de contrôle de purge ou de la vitesse de contrôle du rapport air-carburant en conformité avec lesdits résultats des premiers et seconds calculs ou avec ladite quantité de vapeur de carburant.

16. Une commande de moteur à combustion interne selon l'une quelconque des revendications 1 à 15, **caractérisée en ce que** ladite commande de moteur à combustion interne (6) comprend également :

(a) un dispositif de coupure du carburant après réduction de la vitesse pour arrêter l'alimentation en carburant vers ledit moteur à combustion interne, **caractérisé en ce que** ledit dispositif de coupure du carburant arrête le carburant à un moment précis après avoir détecté la réduction de la vitesse et détermine si ladite soupape de contrôle de purge (13) devrait ou non être réglée en fonction de l'arrêt de la purge durant ladite période de temps spécifiée en conformité avec au moins lesdits résultats des premiers et seconds calculs ou la quantité de vapeur de carburant ; et

(b) un dispositif pour régler ledit montant de contrôle de purge en fonction de l'arrêt de la purge selon ladite détermination.

# FIG.1

# FIG.2

13a

13b

13

FUEL STEAM PASSGE

# FIG.3

21

POWER SUPPLY

13b

6b

6a

22

CONTROL SIGNAL

# FIG.4

```
         ( START OF PURGE CONTROL )
                    │
   ┌─────────────────────────────────────┐
   │ INFORMATION ON OPERATING STAGE RECEIVED │ ～41
   └─────────────────────────────────────┘
                    │
   ┌─────────────────────────────────────┐
   │ EVALUATION OF CONTROL START CONDITIONS │ ～42a
   └─────────────────────────────────────┘
                    │
            ╱ IS THE CONTROL START ╲    NO
            ╲ CONDITION MET?       ╱ ──────────┐
                    │  42b                      │
                   YES                          │
   50a  ┌─────────────────────────────┐         │
   ┌────│ DECELERATION STATE DETECTION │        │
        └─────────────────────────────┘         │
                    │                           │
   50b  ┌─────────────────────────────┐         │
   ┌────│ EVALUATION OF VALVE          │        │
        │ CLOSURE AT DECELERATION      │        │
        └─────────────────────────────┘         │
                    │                           │
   50c       ╱ DOES THE VALVE CLOSE ╲   YES     │
   ┌─────────╲ AT DECELERATION?      ╱ ─────────┤
                    │                           │
                   NO                           │
        ┌─────────────────────────────┐         │
        │ CALCULATE THE BASIC OUTPUT   │ ～43    │
        │ VALUE CALCULATION.           │         │
        └─────────────────────────────┘         │
                    │                           │
        ┌─────────────────────────────┐         │
        │ COMPARE BETWEEN ACTUAL OUTPUT│ ～44a   │
        │ VALUE AND BASIC OUTPUT VALUE.│         │
        └─────────────────────────────┘         │
                    │                           │
  YES       ╱ HAS THE ACTUAL OUTPUT VALUE ╲ ～44b│
   ┌────────╲ REACHED THE BASIC OUTPUT VALUE? ╱  │
   │                │                           │
   │               NO                           │
   │    ┌─────────────────────────────┐ ～45    │
   │    │ EXECUTE THE DYNAMIC LIMITATION. │      │
   │    └─────────────────────────────┘         │
   │                │                           │
 46a│              46b                      46c │
┌───────────────┐ ┌───────────────────┐ ┌───────────────────┐
│ DETERMINE THE │ │ DETERMINE THE      │ │ DETERMINE THE     │
│ ACTUAL OUTPUT │ │ ACTUAL OUTPUT      │ │ ACTUAL OUTPUT     │
│ VALUE AT BASIC│ │ VALUE ACCORDING TO │ │ VALUE AT CLOSED   │
│ OUTPUT VALUE. │ │ THE DYNAMIC        │ │ VALVE STATE VALUE.│
│               │ │ LIMITATION.        │ │                   │
└───────────────┘ └───────────────────┘ └───────────────────┘
                    │                           │
        ┌─────────────────────────────┐         │
        │ VERIFICATION OF AIR-FUEL     │ ～47a   │
        │ RATIO SENSOR SIGNAL          │         │
        └─────────────────────────────┘         │
                    │                           │
            ╱ IS THE AIR-FUEL RATIO ╲   YES      │
            ╲ SENSOR FAULTY?        ╱ ──────────┤
           47b      │                           │
                   NO                           │
        ┌─────────────────────────────┐         │
        │ SET THE ACTUAL OUTPUT        │         │
        │ VALUE TO FAIL-SAFETY VALUE.  │         │
        └─────────────────────────────┘         │
           48       │                           │
        ┌─────────────────────────────┐◄────────┘
        │ SET THE ACTUAL OUTPUT VALUE. │
        └─────────────────────────────┘
           49       │
                 ( END )
```

# FIG.5

# FIG.6

START OF DYNAMIC LIMITATION

AIR-FUEL RATIO SENSOR SIGNAL RECEIVED — 60

IS THE AIR-FUEL RATIO SENSOR FAULTY? — 66
YES

NO

FILTER THE SIGNAL. — 61

COMPARE BETWEEN "LEAN" EVALUATION VALUE AND AIR-FUEL RATIO SENSOR SIGNAL AFTER FILTERING. — 62

SHIFTED FROM "RICH" TO "LEAN" SIDES? — 63
NO

YES

DETERMINE THE DYNAMIC LIMITATION RANGE. — 64a

HOLD THE PREVIOUS ACTUAL OUTPUT VALUE. — 65

ADD THE STEP WIDTH FOR DYNAMIC LIMITATION TO THE PREVIOUS ACTUAL OUTPUT VALUE. — 64b

END

# FIG.7

O2 AIR-FUEL RATIO SENSOR SIGNAL WAVEFORM

60a

O2t FILTER WAVEFORM

61a

PURGE CONTROL OUTPUT VALUE

71

70

# FIG.8

```
        ( START OF DYNAMIC LIMITATION )
                      │
        ┌─────────────────────────────┐
        │ SIGNALS OF BOTH AIR-FUEL    │──── 60
        │ RATIO SENSORS RECEIVED      │
        └─────────────────────────────┘
                      │
   YES  ╱─────────────────────────────╲──── 66
  ◄─────│ ARE BOTH AIR-FUEL RATIO      │
        ╲ SENSORS FAULTY?             ╱
                    │ NO
                                        67
        ╱─────────────────────────────╲
        │ IS ONE OF THE AIR-FUEL       │── YES ──┐
        ╲ RATIO SENSORS FAULTY?       ╱          │
                    │ NO                          │
                         61b              61c     │
        ┌──────────────────────┐    ┌───────────────────┐
        │ FILTER BOTH SIGNALS.  │    │ FILTER THE        │
        └──────────────────────┘ 68 │ NORMAL SIGNAL.    │
        ┌──────────────────────┐    └───────────────────┘
        │ SELECT THE SIGNAL.    │              │
        └──────────────────────┘              │
                      │◄──────────────────────┘
        ┌─────────────────────────────────────────┐
        │ COMPARE BETWEEN THE VALUE FOR "LEAN"     │── 62
        │ EVALUATION AND SELECTED AIR-FUEL RATIO   │
        │ SENSOR SIGNALS AFTER BEING FILTERED.     │
        └─────────────────────────────────────────┘
                      │
   NO   ╱─────────────────────────────╲──── 63
  ◄─────│ SHIFTED FROM "RICH"          │
        ╲ SHIFTED TO "LEAN" SIDES?    ╱
                    │ YES
        ┌─────────────────────────────┐
        │ DETERMINE THE RANGE          │──── 64a
        │ OF DYNAMIC LIMITATION        │
        └─────────────────────────────┘
                                           
  65                                       
  ┌──────────────────┐  ┌───────────────────────────────┐
  │ HOLD THE PREVIOUS │  │ ADD THE STEP WIDTH FOR DYNAMIC │── 64b
  │ ACTUAL OUTPUT     │  │ LIMITATION TO THE PREVIOUS     │
  │ VALUE.            │  │ ACTUAL OUTPUT VALUE.           │
  └──────────────────┘  └───────────────────────────────┘
          │                          │
          └──────────────────────────┤
                                ( END )
```

EP 0 750 108 B1

## FIG.9

Y-axis: STEP WIDTH FOR DYNAMIC LIMITATION

X-axis: AMOUNT OF FUEL STEAM

## FIG.10

START

INFORMATION ON OPERATING STATE RECEIVED — 81

AMOUNT OF BASIC FUEL INJECTION — 82

AIR-FUEL RATIO DETECTION — 83

AIR-FUEL RATIO CONTROL AMOUNT $\alpha$ — 84

FUEL INJECTION AMOUNT Ti — 85

END

## FIG.11

REACH

AIR-FUEL RATIO SENSOR SIGNAL — 86

AIR-FUEL RATIO CONTROL AMOUNT: $\alpha$ — 87

# FIG.12

```
                    ( START )

          ┌─────────────────────────┐
          │ INFORMATION ON OPERATING │ ～100
          │ STATE RECEIVED           │
          └─────────────────────────┘

              ╱─────────────────╲        101
             ⟨  INITIAL STATE?    ⟩─────────── YES ──────────┐
              ╲─────────────────╱                            │
                      │ NO                                    │
          ┌─────────────────────────┐                        │
          │ VERIFY THE RESULT OF     │ ～102                  │
          │ FAILURE DIAGNOSIS.       │                        │
          └─────────────────────────┘                        │
          ┌─────────────────────────┐                        │
          │ VERIFY THE CONTROL LIMIT.│ ～103                  │
          └─────────────────────────┘                        │
          ┌─────────────────────────┐                        │
          │ DETECT THE ATMOSPHERIC   │ ～104                  │
          │ PRESSURE.                │                        │
          └─────────────────────────┘                        │
              ╱─────────────────────────╲   105              │
   NO ───────⟨ SHOULD THE AMOUNT OF FUEL  ⟩                   │
   │          ╲ STEAM BE DETERMINED?     ╱                    │
   │              │ YES                                        │
   │  ┌─────────────────────────┐                             │
   │  │ SEARCH THE OPERATION RANGE.│ ～106                    │
   │  └─────────────────────────┘                             │
   │  ┌─────────────────────────┐                             │
   │  │ SELECT THE TARGET        │ ～107                      │
   │  │ FOR CALCULATION.         │                            │
   │  └─────────────────────────┘                             │
   │  ┌─────────────────────────┐                             │
   │  │ VERIFY THE OPERATING     │ ～108                      │
   │  │ CONDITIONS.              │                            │
   │  └─────────────────────────┘                             │
   │  ┌─────────────────────────┐                             │
   │  │ READ OUT THE EVP (n).    │ ～109                      │
   │  └─────────────────────────┘                             │
   │      ╱─────────────────────╲   110                       │
   │ NO ─⟨ CALCULATION MADE       ⟩                           │
   │ │    ⟨ WITH AIR-FUEL RATIO   ⟩                           │
   │ │    ╲ CONTROL AMOUNT α ?   ╱                            │
   │ │        │ YES                                            │
   │ │  ┌─────────────────────────┐                           │
   │ │  │ READ OUT THE α.         │ ～111                     │
   │ │  └─────────────────────────┘                           │
   │ │  ┌─────────────────────────┐                           │
   │ │  │ CALCULATE THE           │ ～112                     │
   │ │  │ AVERAGE OF α.           │                           │
   │ │  └─────────────────────────┘                           │
   ▽ ▽          ▽                                    ▽
   D  C          B                                    A
```

# FIG.13

A

INFORMATION ON
STOP TIME RECEIVED — 121

INFORMATION ON WATER
TEMPERATURE AT THE TIME — 122
OF STARTUP RECEIVED

READ OUT THE
STORAGE VALUE. — 123

124

STARTED FOR THE FIRST TIME? — YES

NO

CALCULATE THE
COMPENSATION
COEFFICIENT.

SELECT THE
INITIAL VALUE.

125 — 126

SET THE INITIAL VALUE.

127

E

# FIG.14

```
D        C                          B                          E

        131                        113
CALCULATE THE AMOUNT         CALCULATE THE AMOUNT
OF FUEL STEAM (2).           OF FUEL STEAM (1).

        114a                       114a
DETERMINE THE VARIATION      DETERMINE THE VARIATION
RANGE CONTROL VALUE.         RANGE CONTROL VALUE.

        114b                       114b
CONTROL THE                  CONTROL THE
VARIATION RANGE.             VARIATION RANGE.

        133                        115
EVP (n) = CALCULATED VALUE (2)   EVP (n) = CALCULATED VALUE (1)
```

CALCULATE THE AMOUNT
OF FUEL STEAM IN THE    134
NON-TARGET AREA.

IS POSITIVE PRESSURE BEING
APPLIED, OR HAS A SPECIFIED   116
TIME PASSED AFTER                   NO
APPLICATION OF PRESSURE?

YES

EVP (n) = KEVPF (n)    135          EVP (n) = KEVP (n)    117

EVPMEM (n) = EVP (n)    118
EVPMEM (m) = EVP (m)

END

# FIG.15

# FIG.16

```
          ( AIR-FUEL RATIO CONTROL )
                      │
          ┌───────────────────────────┐
          │ INFORMATION ON OPERATING  │  150
          │ STARE RECEIVED            │
          └───────────────────────────┘
                      │
          ┌───────────────────────────┐
          │ AIR-FUEL RATIO SENSOR     │  151
          │ SIGNAL RECEIVED           │
          └───────────────────────────┘
                      │
   YES    ╱ IS THE AIR-FUEL RATIO ╲       152a
 ◄────────  SENSOR SIGNAL FAULTY?  ╲
           ╲                       ╱
                   │ NO
   YES    ╱ IS THE AIR-FUEL RATIO ╲       152b
 ◄────────  SENSOR ACTUATED?       ╲
           ╲                       ╱
                   │ NO
          ┌───────────────────────────┐
          │ DETERMINE THE P AND I     │  153
          │ COMPOUNDS.                │
          └───────────────────────────┘
                      │
          ┌───────────────────────────┐
          │ READ OUT THE EVP (n) .    │  154
          └───────────────────────────┘
                      │
         ╱ IS PURGE CONTROL DURING ╲    YES
          ╲ DYNAMIC LIMITATION?     ╲ ──────►
  155a            │ NO
         ╱ IS PURGE CONTROL AMOUNT  ╲   YES
          ╲ WITHIN THE SPECIFIED RANGE? ──────►
  155b            │ NO
         ╱ IS THE EVP (n) WITHIN THE ╲  YES
          ╲ SPECIFIED RANGE?          ──────►
  155c            │ NO
                                   ┌──────────────────────────┐
                              156  │ DETERMINE THE P AND I    │
                                   │ COMPENSATION VALUE.      │
                                   └──────────────────────────┘
                                             │
                              157  ┌──────────────────────────┐
                                   │ COMPENSATE P AND I.      │
                                   └──────────────────────────┘
                                             │
  ┌──────────────┐              ◄─────────────┘
  │  α = 1.0     │  159    ┌──────────────┐  158
  └──────────────┘         │ CALCULATE α. │
         │                 └──────────────┘
         └──────────────────────►│
                      ( END )
```

# FIG.17

```
( DIAGNOSIS OF PURGE PIPE SYSTEM )
            │
┌──────────────────────────────┐
│ INFORMATION ON OPERATING      │~ 170
│ STATE RECEIVED                │
└──────────────────────────────┘
┌──────────────────────────────┐
│ PIPE SYSTEM PRESSURE          │~ 171
│ DETECTING SIGNAL RECEIVED     │
└──────────────────────────────┘
            │
   YES  < IMMEDIATELY AFTER STARTUP OR      >~ 172
         < IMMEDIATELY BEFORE ENGINE STOP?  >
            │ NO
   YES  < IS THE HIGH PRESSURE SIDE INDICATED >~ 173
         < FROM THE START OF OPERATION?        >
            │ NO
         < IS THE PIPE SYSTEM          >  NO ~ 174
         < DIAGNOSTIC CONDITION MET?   >
            │ YES
┌──────────────────────────────┐
│ DIAGNOSE THE PIPE SYSTEM      │~ 175
│ PRESSURE DETECTOR.            │
└──────────────────────────────┘
         < IS THE PIPE SYSTEM PRESSURE > YES
         < SYSTEM FAULTY?              >
   176      │ NO
┌──────────────────────────────┐
│ CLOSE THE PURGE CONTROL VALVE.│~ 177
└──────────────────────────────┘
┌──────────────────────────────┐
│ APPLY SPECIFIED PARTIAL       │~ 178a
│ PRESSURE TO THE PIPE SYSTEM.  │
└──────────────────────────────┘
┌──────────────────────────────┐
│ VERIFY THE PRESSURE DROP.     │~ 179a
└──────────────────────────────┘
   180  < DOES THE PIPE SYSTEM LEAK? > YES
            │ NO
         < CAN THE PURGE CONTROL   >~ 181
   NO    < VALVE OPEN?             >
            │ YES
┌──────────────────────────────┐
│ ACTUATE THE PURGE CONTROL VALVE.│~ 182
└──────────────────────────────┘
┌──────────────────┐
│ WAITING TIME     │~ 183
└──────────────────┘
┌──────────────────────────────┐
│ APPLY SPECIFIED PARTIAL       │~ 178b
│ PRESSURE TO THE PIPE SYSTEM.  │
└──────────────────────────────┘
┌──────────────────────────────┐
│ VERIFY THE PRESSURE DROP.     │~ 179b
└──────────────────────────────┘
   186  < IS THE PIPE SYSTEM CLOGGED? > YES
┌──────────────────┐   184   │ NO            185
│ OPEN THE PURGE   │              ┌──────────────────────┐
│ CONTROL VALVE THE│              │ FAILURE INDICATION   │
│ SPECIFIED AMOUNT.│              └──────────────────────┘
└──────────────────┘
            │
         ( END )
```

# FIG.18